(19)

Europäisches
Patentamt
European
Patent Office
Office européen
des brevets

(11) **EP 4 613 899 A1**

(12) **EUROPEAN PATENT APPLICATION**
published in accordance with Art. 153(4) EPC

(43) Date of publication:
**10.09.2025  Bulletin 2025/37**

(21) Application number: **23918507.7**

(22) Date of filing: **19.10.2023**

(51) International Patent Classification (IPC):
**C22C 38/00** (2006.01)   **C21D 9/46** (2006.01)
**C22C 38/14** (2006.01)   **C22C 38/60** (2006.01)

(52) Cooperative Patent Classification (CPC):
**C21D 9/46; C22C 38/00; C22C 38/14; C22C 38/60**

(86) International application number:
**PCT/JP2023/037921**

(87) International publication number:
**WO 2024/157552 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.01.2023   JP 2023010483**

(71) Applicant: **JFE Steel Corporation
Tokyo 100-0011 (JP)**

(72) Inventors:
- **HATA Katsuya
  Tokyo 100-0011 (JP)**
- **TERASHIMA Shotaro
  Tokyo 100-0011 (JP)**
- **NAKAGAITO Tatsuya
  Tokyo 100-0011 (JP)**
- **TSUDA Seisuke
  Tokyo 100-0011 (JP)**

(74) Representative: **Grünecker Patent- und
Rechtsanwälte
PartG mbB
Leopoldstraße 4
80802 München (DE)**

(54) **GALVANIZED STEEL SHEET AND MEMBER, AND METHOD FOR PRODUCING SAME**

(57)     Provided is a galvanized steel sheet having high strength, high YS, excellent ductility, and excellent hole expansion formability. A base steel sheet includes a specified chemical composition, steel microstructure, and diffusible hydrogen content. In particular, the number density of MnS particle groups and $M_C/M_Q$ in the steel microstructure of the base steel sheet are appropriately controlled, and the diffusible hydrogen content in the base steel sheet is reduced.

*FIG. 1*

10 μm

EP 4 613 899 A1

## Description

TECHNICAL FIELD

The present disclosure relates to a galvanized steel sheet and a member suitable for use in automotive members and the like, and production methods therefor.

BACKGROUND

In recent years, the automobile industry has been attempting to reduce exhaust gases such as $CO_2$ for global environment protection. Specifically, efforts have been made to reduce the amount of exhaust gas by strengthening and reducing the thickness of steel sheets as material for automotive members to thus make the automotive body more lightweight and improve fuel efficiency.

In addition, steel sheets as material for automotive members are often subjected to galvanizing, for example hot-dip galvanizing, for anti-corrosion performance of the automotive body.

As such steel sheets used as material for automotive members, for example, Patent Literature (PTL) 1 discloses "A low-yield-ratio and high-strength cold-rolled steel sheet with excellent hole expansion formability, containing, in mass%, C: 0.04 % to 0.14 %, Si: 0.4 % to 2.2 %, Mn: 1.2 % to 2.4 %, P: 0.02 % or less, S: 0.01 % or less, Al: 0.002 % to 0.5 %, Ti: 0.005 % to 0.1 %, and N: 0.006 % or less, and satisfying $(\%Ti)/(\%S) \geq 5$ where %S and %Ti are respectively the S and Ti contents, with the balance consisting of Fe and inevitable impurities."

PTL 2 discloses "A hot-dip galvanized high-strength steel sheet with excellent formability, containing, in mass%, C: 0.07 % to 0.22 %, Si: 0.005 % to 1.0 %, Mn: 1.5 % to 2.8 %, P: 0.001 % to 0.1 %, S: 0.001 % to 0.01 %, N: 0.0005 % to 0.01 %, and Al: 0.02 % to 1.0 % with the balance consisting of Fe and inevitable impurities, and comprising a microstructure that contains ferrite in an area ratio of 20 % to 70 %, retained austenite in an area ratio of 1 % to 5 % or less, martensite in an area ratio of 20 % or more and 70 % or less, and bainite as residual microstructure, wherein formulas (A-1), (A-2), and (B) are satisfied."

PTL 3 discloses "A high-strength steel sheet with excellent workability, containing C: 0.03 % to 0.13 % (mass%, the same applies to the chemical composition below), Si: 0.02 % to 0.8 %, Mn: 1.0 % to 2.5 %, P: 0.03 % or less, S: 0.01 % or less, Al: 0.01 % to 0.1 %, N: 0.01 % or less, and Ti: 0.004 % to 0.1 % and/or Nb: 0.004 % to 0.07 %, with the balance consisting of iron and inevitable impurities, and comprising a microstructure that includes a ferrite matrix phase microstructure and bainite and martensite second phase microstructures and in which the ratio of ferrite is 50 area% to 86 area%, the ratio of bainite is 10 area% to 30 area%, and the ratio of martensite is 4 area% to 20 area% to the total microstructure and (area ratio of bainite) > (area ratio of martensite), wherein an average grain size of ferrite is 2.0 $\mu$m to 5.0 $\mu$m, and (average hardness (Hv) of ferrite)/(tensile strength (MPa) of steel sheet) $\geq$ 0.25.

CITATION LIST

Patent Literature

PTL 1: JP 2002-069574 A
PTL 2: JP 2010-156031 A
PTL 3: JP 2010-065316 A

SUMMARY

(Technical Problem)

Typically, increasing the strength of a steel sheet causes a decrease in ductility. Steel sheets as material for automotive members are, however, required to have both high strength and excellent ductility, specifically, improved total elongation (hereinafter also simply referred to as El) in tensile tests.

In particular, steel sheets used in automotive framework structural members and the like among automotive members are required to have high member strength when press-formed. For example, an effective way of improving the strength of automotive members is to enhance the yield stress (hereinafter also simply referred to as YS) of steel sheets.

Steel sheets used in automotive framework structural members and the like are also required to have excellent formability, especially excellent hole expansion formability (stretch flangeability), because they are formed into complex shapes.

The steel sheets disclosed in PTL 1 to PTL 3 do not satisfy all of these required properties.

It could therefore be helpful to provide a galvanized steel sheet having high strength, high YS, excellent ductility, and excellent hole expansion formability, together with an advantageous production method therefor.

It could also be helpful to provide a member made from the galvanized steel sheet and a production method therefor.

Here, "high strength" and "high YS" mean that the tensile strength (hereinafter also referred to as TS) and YS measured in a tensile test conforming to JIS Z 2241 satisfy the following respective formulas:

- TS

$$780 \text{ MPa} \leq \text{TS}$$

- YS

$$420 \text{ MPa} \leq \text{YS when } 780 \text{ MPa} \leq \text{TS} < 980 \text{ MPa}$$

$$550 \text{ MPa} \leq \text{YS when } 980 \text{ MPa} \leq \text{TS}.$$

"Excellent ductility" means that the total elongation (El) measured in a tensile test conforming to JIS Z 2241 satisfies the following formula:

$$15 \text{ \% } \leq \text{El when } 780 \text{ MPa} \leq \text{TS} < 980 \text{ MPa}$$

$$9 \text{ \% } \leq \text{El when } 980 \text{ MPa} \leq \text{TS}.$$

"Excellent hole expansion formability" means that the maximum hole expansion ratio ($\lambda$) measured in a hole expanding test conforming to JIS Z 2256 is 20 % or more.

(Solution to Problem)

Upon careful examination, we discovered the following.

(1) By adjusting the chemical composition of the base steel sheet to a specified range and limiting the total area ratio of ferrite and bainite to 20 % or more and 90 % or less and the area ratio of martensite to 10 % or more and 80 % or less, it is possible to achieve both high strength and excellent ductility.

(2) By reducing the number of coarse MnS particle groups in the base steel sheet, especially in the vicinity of the sheet thickness center of the base steel sheet, it is possible to suppress the occurrence of microcracks during perforation by blanking and stress concentration during press forming, thus improving hole expansion formability.

(3) By making the area ratio of martensite in the sheet thickness direction of the base steel sheet as uniform as possible, especially by reducing the difference between the area ratio of martensite at a position of 1/2 of the sheet thickness of the base steel sheet and the area ratio of martensite at a position of 1/4 of the sheet thickness of the base steel sheet, it is possible to improve hole expansion formability and also achieve high YR. The vicinity of the sheet thickness center of the base steel sheet (i.e. position of 1/2 of the sheet thickness of the base steel sheet) is a region where martensite forms easily due to concentration of Mn.

(4) By reducing the diffusible hydrogen content in the base steel sheet, it is possible to further improve hole expansion formability.

The present disclosure is based on these discoveries and further studies.

We thus provide:

1. A galvanized steel sheet comprising: a base steel sheet; and a galvanized layer on a surface of the base steel sheet, wherein the base steel sheet includes: a chemical composition containing (consisting of), in mass%, C: 0.05 % or more and 0.20 % or less, Si: 0.1 % or more and 1.8 % or less, Mn: 1.5 % or more and 3.0 % or less, P: 0.001 % or more and 0.100 % or less, S: 0.0500 % or less, Al: 0.010 % or more and 1.000 % or less, N: 0.0100 % or less, and one or both of Nb and Ti: 0.005 % or more and 0.200 % or less in total, and satisfying the following formula (1), with a balance consisting of Fe and inevitable impurities; and a steel microstructure in which an area ratio of one or both of ferrite and bainite is 20 % or more and 90 % or less in total and an area ratio of martensite is 10 % or more and 80 % or less at a position of 1/4 of a sheet thickness of the base steel sheet, a number density of MnS particle groups with a length of 150 $\mu$m or more in a rolling direction is 7/mm$^2$ or less, and $M_C/M_Q$ is 0.85 or more and 2.00 or less, where Mc is an area ratio of martensite at a position of 1/2 of the sheet thickness of the base steel sheet and $M_Q$ is the area ratio of martensite at the position of 1/4 of the sheet thickness of the base steel sheet, a diffusible hydrogen content in the base steel sheet is 0.50 mass ppm or less, and a tensile strength is 780 MPa or more,

$$0.50 \leq [C] + [Mn]/5 \leq 0.68 \quad \dots (1),$$

where [C] and [Mn] are C content and Mn content in mass% in the chemical composition of the base steel sheet respectively.

2. The galvanized steel sheet according to 1., wherein the chemical composition of the base steel sheet further contains, in mass%, at least one selected from V: 0.45 % or less, B: 0.010 % or less, Cr: 1.0 % or less, Ni: 1.0 % or less, Mo: 1.0 % or less, Sb: 0.1 % or less, Sn: 0.1 % or less, Cu: 1.0 % or less, Ta: 0.1 % or less, W: 0.2 % or less, Mg: 0.01 % or less, Zn: 0.02 % or less, Co: 0.02 % or less, Zr: 0.2 % or less, Ca: 0.02 % or less, Se: 0.02 % or less, Te: 0.02 % or less, Ge: 0.02 % or less, As: 0.05 % or less, Sr: 0.02 % or less, Cs: 0.02 % or less, Hf: 0.02 % or less, Pb: 0.02 % or less, Bi: 0.02 % or less, and REM: 0.02 % or less.

3. The galvanized steel sheet according to 1. or 2., wherein the galvanized layer is a hot-dip galvanized layer or a galvannealed layer.

4. A member produced from the galvanized steel sheet according to any one of 1. to 3.

5. A production method for a galvanized steel sheet, the production method comprising: heating a steel slab having the chemical composition according to 1. or 2. under a condition of an average heating rate in a temperature range from 300 °C to 1220 °C of 0.5 °C/sec or less, a slab heating temperature of 1220 °C or more, and a slab heating time of 1.0 hour or more; thereafter hot rolling the steel slab under a condition of a rolling finish temperature of 840 °C or more and 1000 °C or less, an average cooling rate in a temperature range from the rolling finish temperature to 700 °C of 5 °C/sec or more, and a coiling temperature of 620 °C or less, to obtain a hot-rolled steel sheet; thereafter cold rolling the hot-rolled steel sheet under a condition of a rolling reduction ratio of 20 % or more and 80 % or less to obtain a cold-rolled steel sheet; thereafter heating the cold-rolled steel sheet under a condition of an average heating rate in a temperature range from 600 °C to 750 °C of 1 °C/sec or more; thereafter annealing the cold-rolled steel sheet under a condition of an annealing temperature of 750 °C or more and 920 °C or less, an annealing time of 1 second or more and 30 seconds or less, and an atmospheric hydrogen concentration of less than 10 vol%; thereafter cooling the cold-rolled steel sheet under a condition of an average cooling rate in a temperature range from the annealing temperature - 30 °C to 600 °C of 5 °C/sec or more and 200 °C/sec or less; and thereafter subjecting the cold-rolled steel sheet to galvanizing treatment.

6. The production method for a galvanized steel sheet according to 5., wherein the galvanizing treatment is hot-dip galvanizing treatment or galvannealing treatment.

7. The production method for a galvanized steel sheet according to 5. or 6., further comprising performing temper rolling with an elongation rate of 0.10 % or more after the galvanizing treatment.

8. A production method for a member, the production method comprising subjecting the galvanized steel sheet according to any one of 1. to 3. to at least one of forming and joining to obtain a member.

(Advantageous Effect)

It is thus possible to obtain a galvanized steel sheet having high strength, high YS, excellent ductility, and excellent hole expansion formability. Such a galvanized steel sheet having high strength, high YS, excellent ductility, and excellent hole expansion formability can be used advantageously as material for automotive framework structural members having complex shapes, etc.

BRIEF DESCRIPTION OF THE DRAWINGS

In the accompanying drawings:

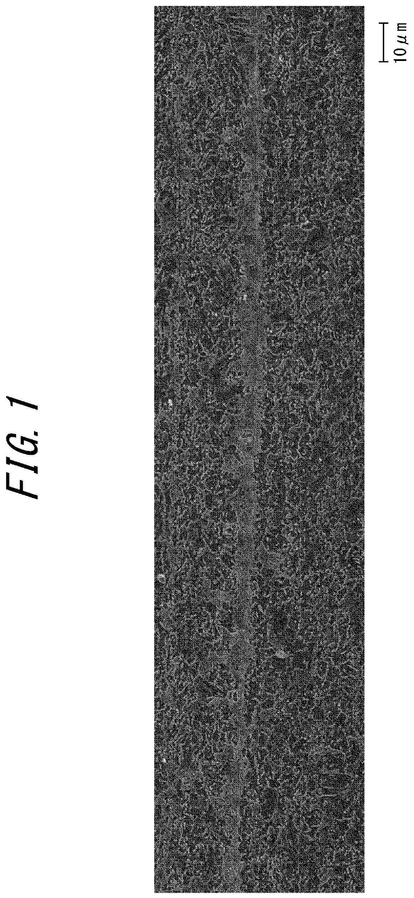

FIG. 1 illustrates an example of an observation image used to measure the number density of MnS particle groups.

DETAILED DESCRIPTION

The presently disclosed technology will be described by way of embodiments below.
First, the chemical composition of a base steel sheet of a galvanized steel sheet according to one embodiment of the present disclosure will be described. The unit of the chemical composition is "mass%", which is hereinafter simply indicated as "%" unless otherwise noted.

C: 0.05 % or more and 0.20 % or less

C is an element that increases the strength of martensite and bainite. Thus, C is added from the viewpoint of ensuring high strength and high YS. If the C content is less than 0.05 %, the area ratio of ferrite increases, making it impossible to obtain the desired strength. If the C content is more than 0.20 %, TS increases excessively and El decreases. Moreover, the stability of austenite increases and bainite is difficult to form. The C content is therefore 0.05 % or more and 0.20 % or less. The C content is preferably 0.06 % or more, more preferably 0.07 % or more, and further preferably 0.09 % or more. The C content is preferably 0.18 % or less, and more preferably 0.17 % or less.

Si: 0.1 % or more and 1.8 % or less

Si is an element that improves the strength of the steel sheet by solid solution strengthening. Si also increases the strength of ferrite, thus improving ductility while suppressing a decrease in strength. Si also promotes ferrite transformation in annealing and subsequent cooling. That is, Si influences the area ratio of ferrite. If the Si content is less than 0.1 %, the area ratio of ferrite decreases and ductility decreases. If the Si content is excessively high, particularly if the Si content is more than 1.8 %, the rolling load during hot rolling and cold rolling increases significantly, and also toughness decreases. The Si content is therefore 0.1 % or more and 1.8 % or less. The Si content is preferably 0.3 % or more, and more preferably 0.5 % or more. The Si content is preferably 1.5 % or less, and more preferably 1.0 % or less.

Mn: 1.5 % or more and 3.0 % or less

Mn is added to improve the hardenability of the steel and ensure the specified area ratios of martensite and bainite. If the Mn content is less than 1.5 %, hardenability is insufficient and ferrite forms excessively. This makes it difficult to achieve a TS of 780 MPa or more. If the Mn content is excessively high, ferrite and bainite transformation is delayed and ductility decreases. The Mn content is therefore 1.5 % or more and 3.0 % or less. The Mn content is preferably 1.65 % or more, and more preferably 1.8 % or more. The Mn content is preferably 2.85 % or less, and more preferably 2.7 % or less.

P: 0.001 % or more and 0.100 % or less

P is an element that has the effect of solid solution strengthening and increases the TS of the steel sheet. To achieve this effect, the P content is 0.001 % or more. If the P content is more than 0.100 %, P segregates at and embrittles the prior austenite grain boundaries. In such a case, when the steel sheet is subjected to hole expansion processing (stretch flanging), voids form and cracks propagate along the prior austenite grain boundaries, making it impossible to achieve the desired hole expansion formability. The P content is therefore 0.100 % or less. The P content is preferably 0.002 % or more due to production technology constraints. The P content is preferably 0.050 % or less, and more preferably 0.030 % or less.

S: 0.0500 % or less

S forms MnS and the like, causing a decrease in ductility. Moreover, if Ti is contained together with S, TiS, Ti(C, S), etc. may form, causing a decrease in hole expansion formability. In particular, coarse MnS particles degrade hole expansion formability. If the S content is more than 0.0500 %, coarse MnS particles increase, and excellent ductility and excellent hole expansion formability cannot be achieved. The S content is therefore 0.0500 % or less. The S content is preferably 0.0100 % or less, more preferably 0.0050 % or less, and further preferably 0.0030 % or less. No lower limit is placed on the S content, but the S content is preferably 0.0001 % or more, and more preferably 0.0002 % or more.

Al: 0.010 % or more and 1.000 % or less

Al is an element that promotes ferrite transformation in annealing and subsequent cooling. That is, Al influences the area ratio of ferrite. If the Al content is less than 0.010 %, the area ratio of ferrite decreases and ductility decreases. If the Al content is more than 1.000 %, the area ratio of ferrite increases excessively, making it difficult to achieve a TS of 780 MPa or more. The Al content is therefore 0.010 % or more and 1.000 % or less. The Al content is preferably 0.015 % or more, and more preferably 0.030 % or more. The Al content is preferably 0.500 % or less, and more preferably 0.100 % or less.

N: 0.0100 % or less

N is an element that forms nitride-based precipitates such as AlN that pin crystal grain boundaries, and can be added to improve elongation. If the N content is more than 0.0100 %, nitride-based precipitates such as AlN coarsen, so that elongation decreases. The N content is therefore 0.0100 % or less. The N content is preferably 0.0070 % or less, and more preferably 0.0050 % or less. No lower limit is placed on the N content, but the N content is preferably 0.0006 % or more due to production technology constraints.

One or both of Nb and Ti: 0.005 % or more and 0.200 % or less in total

Nb and Ti contribute to increasing TS through the formation of fine precipitates, such as carbides, nitrides, and carbonitrides, in hot rolling and annealing. In addition, Nb and Ti reduce the diffusible hydrogen content in the base steel sheet by forming fine precipitates that serve as hydrogen trapping sites, and contribute to high strength and improved hole expansion formability. To achieve these effects, the total content of Nb and Ti is 0.005 % or more. If the total content of Nb and Ti is excessively high, coarse precipitates and inclusions remain without being fully dissolved in slab heating. Complex precipitation of such coarse precipitates and inclusions together with MnS reduces hole expansion formability. The total content of Nb and Ti is therefore 0.200 % or less. The total content of Nb and Ti is preferably 0.010 % or more, and more preferably 0.015 % or more. The total content of Nb and Ti is preferably 0.130 % or less, and more preferably 0.065 % or less.

The respective contents of Nb and Ti are not limited as long as the total content of Nb and Ti is 0.005 % or more and 0.200 % or less,

For example, the Nb content is preferably 0.002 % or more, more preferably 0.005 % or more, and further preferably 0.010 % or more. The Nb content is preferably 0.200 % or less, more preferably 0.100 % or less, and further preferably 0.050 % or less.

The Ti content is preferably 0.002 % or more, more preferably 0.005 % or more, and further preferably 0.010 % or more. The Ti content is preferably 0.200 % or less, more preferably 0.100 % or less, and further preferably 0.050 % or less.

$$0.50 \leq [C] + [Mn]/5 \leq 0.68 \qquad \ldots (1)$$

If the content of C and Mn is excessively high, the amount of coarse carbides and MnS increases, and hole expansion formability decreases. If the content of C and Mn is excessively low, a TS of 780 MPa or more may not be obtained. Therefore, $[C] + [Mn]/5$ satisfies the foregoing formula (1). $[C] + [Mn]/5$ is preferably 0.51 or more, and more preferably 0.52 or more. $[C] + [Mn]/5$ is preferably 0.67 or less, and more preferably 0.66 or less.

$[C]$ and $[Mn]$ are the contents (mass%) of C and Mn in the chemical composition of the base steel sheet, respectively.

The basic chemical composition of the base steel sheet of the galvanized steel sheet according to one embodiment of the present disclosure has been described above. The base steel sheet of the galvanized steel sheet according to one embodiment of the present disclosure has a chemical composition containing the foregoing basic components with the balance other than the basic components containing Fe (iron) and inevitable impurities. It is preferable that the base steel sheet of the galvanized steel sheet according to one embodiment of the present disclosure has a chemical composition containing the foregoing basic components with the balance consisting of Fe and inevitable impurities. The base steel sheet of the galvanized steel sheet according to one embodiment of the present disclosure may contain, in addition to the foregoing basic components, at least one selected from the following as an optionally added element:

V: 0.45 % or less,
B: 0.010 % or less,
Cr: 1.0 % or less,
Ni: 1.0 % or less,
Mo: 1.0 % or less,
Sb: 0.1 % or less,
Sn: 0.1 % or less,
Cu: 1.0 % or less,
Ta: 0.1 % or less,
W: 0.2 % or less,
Mg: 0.01 % or less,
Zn: 0.02 % or less,
Co: 0.02 % or less,
Zr: 0.2 % or less,
Ca: 0.02 % or less,
Se: 0.02 % or less,
Te: 0.02 % or less,
Ge: 0.02 % or less,

As: 0.05 % or less,
Sr: 0.02 % or less,
Cs: 0.02 % or less,
Hf: 0.02 % or less,
Pb: 0.02 % or less,
Bi: 0.02 % or less, and
REM: 0.02 % or less.

No lower limits are placed on these optionally added elements because the effects according to the present disclosure are achieved as long as the contents of these elements are not more than the respective upper limits. If the content of any of these optionally added elements is less than the below-described preferred lower limit, the element is contained as an inevitable impurity.

V: 0.45 % or less

V increases TS by forming fine precipitates, such as carbides, nitrides, and carbonitrides, in hot rolling and annealing, as with Nb and Ti. V also reduces the diffusible hydrogen content in the base steel sheet by forming fine precipitates that serve as hydrogen trapping sites, and contributes to improving hole expansion formability. To achieve these effects, the V content is preferably 0.001 % or more. The V content is more preferably 0.005 % or more. If the V content is more than 0.45 %, a large amount of coarse precipitates and inclusions may form, causing a decrease in ductility. Accordingly, in the case of adding V, the V content is preferably 0.45 % or less. The V content is more preferably 0.060 % or less.

B: 0.010 % or less

B is an element that enhances hardenability by segregating at the austenite grain boundaries. B also controls the formation and grain growth of ferrite in cooling after annealing. To achieve these effects, the B content is preferably 0.0001 % or more. The B content is more preferably 0.0002 % or more. If the B content is more than 0.010 %, the amount of nitride-based precipitates such as BN is excessive, which may cause a decrease in ductility. Accordingly, in the case of adding B, the B content is preferably 0.010 % or less. The B content is more preferably 0.0050 % or less, and further preferably 0.0030 % or less.

Cr: 1.0 % or less

Cr is an element that enhances hardenability and promotes the formation of martensite, thereby increasing TS. To achieve this effect, the Cr content is preferably 0.0005 % or more. The Cr content is more preferably 0.010 % or more. If the Cr content is more than 1.0 %, the area ratio of martensite may increase, causing a decrease in ductility. Accordingly, in the case of adding Cr, the Cr content is preferably 1.0 % or less. The Cr content is more preferably 0.60 % or less, and further preferably 0.30 % or less.

Ni: 1.0 % or less

Ni is an element that enhances hardenability and promotes the formation of martensite, thereby increasing TS. To achieve this effect, the Ni content is preferably 0.005 % or more. The Ni content is more preferably 0.020 % or more. If the Ni content is more than 1.0 %, the area ratio of martensite may increase, causing a decrease in ductility. Accordingly, in the case of adding Ni, the Ni content is preferably 1.0 % or less. The Ni content is more preferably 0.5 % or less.

Mo: 1.0 % or less

Mo is an element that enhances hardenability and promotes the formation of martensite, thereby increasing TS. Mo also reduces the diffusible hydrogen content in the base steel sheet by forming fine precipitates that serve as hydrogen trapping sites, and contributes to improving hole expansion formability. To achieve these effects, the Mo content is preferably 0.010 % or more. The Mo content is more preferably 0.030 % or more. If the Mo content is more than 1.0 %, the area ratio of martensite may increase, making it impossible to achieve the desired ductility. Accordingly, in the case of adding Mo, the Mo content is preferably 1.0 % or less. The Mo content is more preferably 0.5 % or less, and further preferably 0.3 % or less.

Sb: 0.1 % or less

Sb is an element effective in suppressing the diffusion of C near the steel sheet surface during annealing and controlling the formation of a soft layer near the steel sheet surface. If the soft layer increases excessively near the steel sheet surface, it may be difficult to achieve a TS of 780 MPa or more. The Sb content is therefore preferably 0.002 % or more. The Sb content is more preferably 0.005 % or more. If the Sb content is more than 0.1 %, castability decreases. Accordingly, in the case of adding Sb, the Sb content is preferably 0.1 % or less. The Sb content is more preferably 0.06 % or less, and further preferably 0.04 % or less.

Sn: 0.1 % or less

Sn suppresses oxidation and nitridation near the steel sheet surface to thus suppress the resulting decrease in the C and B contents near the steel sheet surface. This suppresses excessive ferrite formation near the steel sheet surface, and contributes to achieving a TS of 780 MPa or more. From this viewpoint, the Sn content is preferably 0.002 % or more. If the Sn content is more than 0.1 %, castability decreases. Accordingly, in the case of adding Sn, the Sn content is preferably 0.1 % or less. The Sn content is more preferably 0.04 % or less, and further preferably 0.02 % or less.

Cu: 1.0 % or less

Cu is an element that enhances hardenability and promotes the formation of martensite, thereby increasing TS. To achieve this effect, the Cu content is preferably 0.005 % or more. The Cu content is more preferably 0.020 % or more. If the Cu content is more than 1.0 %, the area ratio of martensite may increase excessively, causing a decrease in ductility. In addition, a large amount of coarse precipitates and inclusions may form, causing a decrease in ductility. Accordingly, in the case of adding Cu, the Cu content is preferably 1.0 % or less. The Cu content is more preferably 0.2 % or less.

Ta: 0.1 % or less

Ta increases TS by forming fine precipitates, such as carbides, nitrides, and carbonitrides, in hot rolling and annealing, as with Ti, Nb, and V. Ta also partially dissolves in Nb carbides and Nb carbonitrides to form composite precipitates such as (Nb,Ta)(C,N). This suppresses the coarsening of precipitates and stabilizes strengthening by precipitation, thereby further improving TS. To achieve these effects, the Ta content is preferably 0.001 % or more. If the Ta content is more than 0.1 %, a large amount of coarse precipitates and inclusions may form. Such coarse precipitates and inclusions may reduce ductility and hole expansion formability. Accordingly, in the case of adding Ta, the Ta content is preferably 0.1 % or less. The Ta content is more preferably 0.05 % or less.

W: 0.2 % or less

W increases TS by forming fine precipitates, such as carbides, nitrides, and carbonitrides, in hot rolling and annealing, as with Ti and Nb. W also reduces the diffusible hydrogen content in the base steel sheet by forming fine precipitates that serve as hydrogen trapping sites, and contributes to improving hole expansion formability. To achieve these effects, the W content is preferably 0.001 % or more. The W content is more preferably 0.005 % or more. If the W content is more than 0.2 %, a large amount of coarse precipitates and inclusions form, causing a decrease in ductility. Accordingly, in the case of adding W, the W content is preferably 0.2 % or less. The W content is more preferably 0.060 % or less.

Mg: 0.01 % or less

Mg is an effective element for spheroidizing inclusions such as sulfides and oxides to improve the hole expansion formability of the steel sheet. To achieve this effect, the Mg content is preferably 0.0001 % or more. If the Mg content is more than 0.01 %, surface quality decreases. Accordingly, in the case of adding Mg, the Mg content is preferably 0.01 % or less. The Mg content is more preferably 0.005 % or less, and further preferably 0.001 % or less.

Zn: 0.02 % or less

Zn is an effective element for spheroidizing inclusions to improve the hole expansion formability of the steel sheet. To achieve this effect, the Zn content is preferably 0.001 % or more. If the Zn content is more than 0.02 %, a large amount of coarse precipitates and inclusions may form, causing a decrease in hole expansion formability. Accordingly, in the case of adding Zn, the Zn content is preferably 0.02 % or less.

Co: 0.02 % or less

Co is an effective element for spheroidizing inclusions to improve the hole expansion formability of the steel sheet, as with Zn. To achieve this effect, the Co content is preferably 0.001 % or more. If the Co content is more than 0.02 %, a large amount of coarse precipitates and inclusions may form, causing a decrease in hole expansion formability. Accordingly, in the case of adding Co, the Co content is preferably 0.02 % or less.

Zr: 0.2 % or less

Zr contributes to higher strength by refining prior austenite grains. Zr also contributes to higher strength by reducing, for example, the block size and Bain unit size which are the internal structural units of martensite and bainite, through the refinement of prior austenite grains. In addition, Zr improves castability. To achieve these effects, the Zr content is preferably 0.001 % or more. If the Zr content is high, the amount of coarse ZrN-based and ZrS-based precipitates remaining undissolved in slab heating increases, and ductility decreases. Accordingly, in the case of adding Zr, the Zr content is preferably 0.2 % or less. The Zr content is more preferably 0.05 % or less, and further preferably 0.01 % or less.

Ca: 0.02 % or less

Ca exists as inclusions in steel. If the Ca content is more than 0.02 %, a large amount of coarse inclusions may form, causing ductility and hole expansion formability to decrease. Surface quality degrades, too. Accordingly, in the case of adding Ca, the Ca content is preferably 0.02 % or less. No lower limit is placed on the Ca content, but the Ca content is preferably 0.0005 % or more, for example. The Ca content is more preferably 0.0010 % or more due to production technology constraints.

Se: 0.02 % or less, Te: 0.02 % or less, Ge: 0.02 % or less, As: 0.05 % or less, Sr: 0.02 % or less, Cs: 0.02 % or less, Hf: 0.02 % or less, Pb: 0.02 % or less, Bi: 0.02 % or less, and REM: 0.02 % or less

Se, Te, Ge, As, Sr, Cs, Hf, Pb, Bi, and REM are each an element effective in improving the hole expansion formability of the steel sheet. To achieve this effect, the Se, Te, Ge, As, Sr, Cs, Hf, Pb, Bi, and REM contents are each preferably 0.0001 % or more. If the Se, Te, Ge, Sr, Cs, Hf, Pb, Bi, and REM contents are each more than 0.02 % or the As content is more than 0.05 %, a large amount of coarse precipitates and inclusions may form, causing a decrease in hole expansion formability. Accordingly, in the case of adding these elements, the Se, Te, Ge, Sr, Cs, Hf, Pb, Bi, and REM contents are each preferably 0.02 % or less, and the As content is preferably 0.05 % or less. Se, Te, Ge, As, Sr, Cs, Hf, Pb, Bi, and REM may be added alone or in combination.

The balance other than the above-described elements consists of Fe and inevitable impurities.

Next, the steel microstructure of the base steel sheet of the galvanized steel sheet according to one embodiment of the present disclosure will be described.

The steel microstructure of the base steel sheet of the galvanized steel sheet according to one embodiment of the present disclosure is a steel microstructure in which the area ratio of one or both of ferrite and bainite is 20 % or more and 90 % or less in total and the area ratio of martensite is 10 % or more and 80 % or less at a position of 1/4 of the sheet thickness of the base steel sheet, the number density of MnS particle groups with a length of 150 $\mu$m or more in the rolling direction is 7/mm$^2$ or less, and $M_C/M_Q$ is 0.85 or more and 2.00 or less, where Mc and $M_Q$ are the area ratios of martensite at positions of 1/2 and 1/4 of the sheet thickness of the base steel sheet respectively.

The reasons for these limitations will be given below. The area ratio of each phase is the ratio of the area occupied by the phase to the area of the entire steel microstructure.

Total area ratio of one or both of ferrite and bainite (hereinafter also referred to as "total area ratio of ferrite and bainite"): 20 % or more and 90 % or less

Ferrite and bainite are soft, and thus are effective in obtaining excellent ductility. To achieve the desired ductility, the total area ratio of ferrite and bainite is 20 % or more. If the area ratio of ferrite and bainite is excessively high, it is difficult to achieve a TS of 780 MPa or more. The total area ratio of ferrite and bainite is therefore 90 % or less. The total area ratio of ferrite and bainite is preferably 25 % or more, and more preferably 30 % or more. The total area ratio of ferrite and bainite is preferably 75 % or less, and more preferably 65 % or less. One of ferrite and bainite may be contained. Both ferrite and bainite may be contained.

Area ratio of martensite: 10 % or more and 80 % or less

Martensite is a microstructure that is hard and is necessary to increase the strength of the steel sheet. If the area ratio of martensite is less than 10 %, the desired TS cannot be achieved. If the area ratio of martensite is excessively high, ductility decreases. The area ratio of martensite is therefore 10 % or more and 80 % or less. The area ratio of martensite is preferably 20 % or more, and more preferably 30 % or more. The area ratio of martensite is preferably 75 % or less, and more preferably 60 % or less.

Martensite is a hard microstructure formed as a result of transformation from austenite at the martensite transformation point (also simply referred to as "Ms point") or less, and includes both fresh martensite as quenched and tempered martensite obtained by tempering fresh martensite.

The steel microstructure of the base steel sheet may contain retained austenite. Retained austenite improves the balance between strength and ductility. If retained austenite is excessive, however, for example when the steel sheet is formed into a part, retained austenite transforms into martensite and crack initiation points increase. The area ratio of retained austenite is therefore preferably 20 % or less, more preferably 15 % or less, and further preferably 10 % or less. The area ratio of retained austenite may be 0 %.

Retained austenite is austenite remaining as a result of austenite not transforming into ferrite, martensite, bainite, or any other metallic phase. Retained austenite forms, for example, when elements such as C are concentrated in austenite and as a result the martensite transformation point fall to room temperature or below (austenite remains without transforming).

The area ratio of the residual microstructures other than the above is preferably 10 % or less. The area ratio of the residual microstructures is more preferably 5 % or less. The area ratio of the residual microstructures may be 0 %.

The residual microstructures are not limited, and examples thereof include carbides such as cementite and pearlite. The types of the residual microstructures can be determined, for example, by observation with a scanning electron microscope (SEM). Pearlite is a microstructure that forms from austenite at a relatively high temperature and consists of layered ferrite and cementite.

The total area ratio of ferrite and bainite and the area ratio of martensite are measured at a position of 1/4 of the sheet thickness of the base steel sheet as follows.

A sample is cut out from the galvanized steel sheet so that a sheet thickness section (L-section) parallel to the rolling direction of the base steel sheet of the galvanized steel sheet will be the observation plane. The observation plane of the sample is then polished using diamond paste, and then finish-polished using alumina. Following this, the observation plane of the sample is etched with nital to reveal the microstructure. The observation plane of the sample is then observed using a scanning electron microscope (SEM) at a magnification of 1500 times for five observation fields. Next, from the obtained microstructure images, the following regions are color-coded (defined) using Adobe Photoshop available from Adobe Systems Co., Ltd. The total area ratio of ferrite and bainite and the area ratio of martensite are then calculated by the point counting method. Specifically, $16 \times 15$ lattice points are set at intervals of 4.8 $\mu$m in a region of actual length: 82 $\mu$m $\times$ 57 $\mu$m of each SEM image. Next, the number of lattice points on ferrite and bainite and the number of lattice points on martensite are counted. The number of lattice points on ferrite and bainite and the number of lattice points on martensite are then each divided by the total number of lattice points and multiplied by 100, thus calculating the total area ratio of ferrite and bainite and the area ratio of martensite.

Ferrite: a massive black region. Ferrite is a microstructure made of crystal grains of a bcc lattice. Ferrite is formed as a result of transformation from austenite at relatively high temperatures.

Bainite: a black to dark gray region of a massive form, an irregular form, or the like. Bainite is a hard microstructure in which fine carbides are dispersed in acicular or platelike ferrite, as mentioned above. Bainite is formed from austenite at relatively low temperatures (higher than or equal to the Ms point). Bainite contains a relatively small amount of carbides.

Martensite: a white to light gray region. Martensite is a hard microstructure formed as a result of transformation from austenite at the Ms point or less, as mentioned above. Martensite includes both fresh martensite as quenched and tempered martensite obtained by tempering fresh martensite.

The area ratio of retained austenite is measured at a position of 1/4 of the sheet thickness of the base steel sheet as follows.

The base steel sheet is mechanically ground to the position of 1/4 of the sheet thickness in the sheet thickness direction (depth direction), and then chemically polished with oxalic acid to form an observation plane. The observation plane is then observed by X-ray diffractometry. CoK$\alpha$ rays are used for incident X-rays to determine the ratio of the diffraction intensity of each of (200), (220), and (311) planes of fcc iron (austenite) to the diffraction intensity of each of (200), (211), and (220) planes of bcc iron. The volume fraction of retained austenite is then calculated from the ratio of the diffraction intensity of each plane. Assuming that retained austenite is three-dimensionally homogeneous, the volume fraction of retained austenite is taken as the area ratio of retained austenite.

The area ratio of residual microstructures is calculated by subtracting the total area ratio of ferrite and bainite, the area ratio of martensite, and the area ratio of retained austenite calculated as described above from 100 %.

[Area ratio of residual microstructures (%)] = 100 - [Total area ratio of ferrite and bainite (%)] - [Area ratio of martensite (%)] - [Area ratio of retained austenite (%)].

Number density of MnS particle groups with length of 150 $\mu$m or more in rolling direction (hereafter also simply referred to as "MnS particle groups"): 7/mm$^2$ or less

Coarse MnS in the vicinity of the sheet thickness center of the base steel sheet causes the occurrence of microcracks when the galvanized steel sheet is subjected to perforation by blanking. Such coarse MnS is also a cause of stress concentration during press forming. These adverse effects are noticeable particularly when coarse MnS extends in the rolling direction or a plurality of MnS particles are present close to each other like a row of points. Hence, reducing the number density of MnS particle groups is important in obtaining excellent hole expansion formability. The number density of MnS particle groups is therefore $7/mm^2$ or less. The number density of MnS particle groups is preferably $5/mm^2$ or less, and more preferably $3/mm^2$ or less. The number density of MnS particle groups may be $0/mm^2$.

A MnS particle group is composed of one or more MnS particles with a major axis length of 0.3 $\mu$m or more. In the case where a MnS particle group is composed of two or more MnS particles, the distance between the closest MnS particles (i.e. MnS particles closest to each other) with a major axis length of 0.3 $\mu$m or more is 10 $\mu$m or less. In detail, if the distance between one MnS particle (hereinafter also referred to as "the MnS particle") and a MnS particle with a major axis length of 0.3 $\mu$m or more closest to the MnS particle (hereinafter also referred to as "the nearest MnS particle") is 10 $\mu$m or less, the MnS particle and the nearest MnS particle are determined to belong to the same MnS particle group.

The number density of MnS particle groups is determined as follows.

A sample is cut out from the galvanized steel sheet so that a sheet thickness section (L-section) parallel to the rolling direction of the base steel sheet of the galvanized steel sheet will be the observation plane. The observation plane of the sample is then observed with a scanning electron microscope (SEM) at a magnification of 1500 times so that the position of 1/2 of the sheet thickness of the base steel sheet will be the center, and a reflected electron image is obtained. Image analysis is then performed by ImageJ using phase map, and the major axis length and barycentric position of each MnS particle observed are obtained by the particle analysis function. For reference, FIG. 1 illustrates an example of an observation image. In the observation image, white regions extending in the rolling direction are MnS particles. The regions may contain precipitates and inclusions such as TiS and Ti(C, S) in addition to MnS. In the following measurement, these can be also regarded as MnS particles. Next, for each MnS particle with a major axis length of 0.3 $\mu$m or more among the observed MnS particles, which MnS particle group the MnS particle with a major axis length of 0.3 $\mu$m or more belongs to is determined based on the distance from the nearest MnS particle with a major axis length of 0.3 $\mu$m or more (distance between the centroids of particles). The length of each MnS particle group in the rolling direction is then measured, and the number of MnS particle groups with a length of 150 $\mu$m or more in the rolling direction is counted. In the case where a MnS particle group is composed of two or more MnS particles, the length of the MnS particle group in the rolling direction is the length (distance) in the rolling direction between the rolling direction outer ends of the MnS particles located at both ends of the MnS particle group in the rolling direction. In the case where a MnS particle group is composed of one MnS particle, the length of the MnS particle group in the rolling direction is the length of the MnS particle in the rolling direction. The number of MnS particle groups with a length of 150 $\mu$m or more in the rolling direction is then divided by the area of the observation region (approximately 1.6 $mm^2$ (region of 650 $\mu$m in the sheet thickness direction and 2500 $\mu$m in the rolling direction)) to calculate the number density of MnS particle groups.

$M_C/M_Q$: 0.85 or more and 2.00 or less

By reducing the difference between the area ratio of martensite at a position of 1/2 of the sheet thickness of the base steel sheet and the area ratio of martensite at a position of 1/4 of the sheet thickness of the base steel sheet, it is possible to improve hole expansion formability and also achieve high YR. If $M_C/M_Q$ is less than 0.85 or more than 2.00, the difference in strength between the position of 1/2 of the sheet thickness of the base steel sheet and the position of 1/4 of the sheet thickness of the base steel sheet is large, and crack initiation points during blanking tend to form. $M_C/M_Q$ is therefore 0.85 or more and 2.00 or less. $M_C/M_Q$ is preferably 0.90 or more, and more preferably 0.95 or more. $M_C/M_Q$ is preferably 1.90 or less, and more preferably 1.80 or less. $M_C/M_Q$ is most preferably near 1.00, at which the steel microstructure of the base steel sheet in the sheet thickness direction is uniform.

$M_C/M_Q$ is determined as follows.

The area ratio of martensite is measured at the position of 1/2 of the sheet thickness of the base steel sheet in the same manner as the foregoing measurement of the area ratio of martensite at the position of 1/4 of the sheet thickness of the base steel sheet. $M_C/M_Q$ is then calculated by dividing Mc by $M_Q$, where Mc and $M_Q$ are the area ratios of martensite at the positions of 1/2 and 1/4 of the sheet thickness of the base steel sheet respectively.

Diffusible hydrogen content in base steel sheet: 0.50 mass ppm or less

The diffusible hydrogen content in the base steel sheet is 0.50 mass ppm or less, from the viewpoint of obtaining excellent hole expansion formability. The diffusible hydrogen content in the base steel sheet is preferably 0.45 mass ppm or less, more preferably 0.40 mass ppm or less, and further preferably 0.35 mass ppm or less. No lower limit is placed on the diffusible hydrogen content in the base steel sheet, and the diffusible hydrogen content in the base steel sheet may be 0 mass ppm. The diffusible hydrogen content in the base steel sheet is preferably 0.01 mass ppm or more due to production technology constraints.

The diffusible hydrogen content in the base steel sheet is measured as follows.

A test piece 30 mm long and 5 mm wide is collected from the galvanized steel sheet, and the galvanized layer is removed using a router (precision grinder). Next, the amount of hydrogen released from the test piece is measured by thermal desorption analysis. Specifically, the test piece is continuously heated at a heating rate of 200 °C/h from 25 °C to 300 °C, and then cooled to room temperature. Here, the amount of hydrogen (cumulative amount of hydrogen) released from the test piece in the temperature range from 25°C to 210°C during the continuous heating is measured. The measured amount of hydrogen is then divided by the mass of the test piece (the test piece after the removal of the galvanized layer and before the continuous heating), and the value converted to mass ppm is taken as the diffusible hydrogen content in the base steel sheet.

For a product (member) resulting from forming (blanking, stretch flanging, etc.) or joining the galvanized steel sheet, a test piece is cut out from the product in a typical use environment, and the diffusible hydrogen content in the base steel sheet part is measured in the same manner as above. If the value is 0.50 mass ppm or less, the diffusible hydrogen content in the base steel sheet of the galvanized steel sheet in the material stage before forming or joining can be regarded as being 0.50 mass ppm or less.

Next, the galvanized layer of the galvanized steel sheet according to one embodiment of the present disclosure will be described. The galvanized layer may be provided on only one side or both sides of the steel sheet. The term "galvanized layer" refers to a coated or plated layer containing Zn as a main component (Zn content: 50.0 mass% or more). Examples of the galvanized layer include a hot-dip galvanized layer and a galvannealed layer. A steel sheet including a galvanized layer is also referred to as a galvanized steel sheet. A steel sheet including a hot-dip galvanized layer and a steel sheet including a galvannealed layer are also referred to as a hot-dip galvanized steel sheet (GI) and a galvannealed steel sheet (GA), respectively.

For example, the hot-dip galvanized layer is preferably composed of Zn, 20.0 mass% or less of Fe, and 0.001 mass% or more and 1.0 mass% or less of Al. The hot-dip galvanized layer may optionally contain one or more elements selected from the group consisting of Pb, Sb, Si, Sn, Mg, Mn, Ni, Cr, Co, Ca, Cu, Li, Ti, Be, Bi, and REM in a total amount of 0.0 mass% or more and 3.5 mass% or less. The Fe content in the hot-dip galvanized layer is more preferably less than 7.0 mass%. The balance other than the foregoing elements consists of inevitable impurities.

For example, the galvannealed layer is preferably composed of Zn, 20 mass% or less of Fe, and 0.001 mass% or more and 1.0 mass% or less of Al. The galvannealed layer may optionally contain one or more elements selected from the group consisting of Pb, Sb, Si, Sn, Mg, Mn, Ni, Cr, Co, Ca, Cu, Li, Ti, Be, Bi, and REM in a total amount of 0.0 mass% or more and 3.5 mass% or less. The Fe content in the galvannealed layer is more preferably 7.0 mass% or more, and further preferably 8.0 mass% or more. The Fe content in the galvannealed layer is more preferably 15.0 mass% or less, and further preferably 12.0 mass% or less. The balance other than the foregoing elements consists of inevitable impurities.

The coating weight of the galvanized layer per side is not limited, but is preferably 20 g/m$^2$ or more and 80 g/m$^2$ or less.

The coating weight of the galvanized layer is measured as follows.

A treatment solution is prepared by adding 0.6 g of a corrosion inhibitor for Fe (IBIT® 700BK (IBIT is a registered trademark in Japan, other countries, or both) produced by Asahi Chemical Co., Ltd.) to 1 L of a 10 mass% hydrochloric acid aqueous solution. A sample of the steel sheet is then immersed in the treatment solution to dissolve the galvanized layer. The mass loss of the sample before and after dissolution is measured, and the value is divided by the surface area of the steel sheet (the surface area of the coated portion) to calculate the coating weight (g/m$^2$).

Next, the mechanical properties of the galvanized steel sheet according to one embodiment of the present disclosure will be described.

Tensile strength (TS): 780 MPa or more

The tensile strength of the galvanized steel sheet according to one embodiment of the present disclosure is 780 MPa or more. Although no upper limit is placed on the tensile strength of the galvanized steel sheet according to one embodiment of the present disclosure, for example, the tensile strength of the galvanized steel sheet according to one embodiment of the present disclosure is preferably less than 1180 MPa.

The yield stress (YS), total elongation (El), and maximum hole expansion ratio ($\lambda$) of the galvanized steel sheet according to one embodiment of the present disclosure are as described above. The tensile strength (TS), yield stress (YS), total elongation (El), and maximum hole expansion ratio ($\lambda$) are measured as described in the EXAMPLES section below.

The sheet thickness of the galvanized steel sheet according to one embodiment of the present disclosure is preferably 0.5 mm or more. The sheet thickness of the galvanized steel sheet according to one embodiment of the present disclosure is preferably 3.5 mm or less.

[2] Member

Next, a member according to one embodiment of the present disclosure will be described.

The member according to one embodiment of the present disclosure is a member produced from (using) the above-described galvanized steel sheet (as material). For example, the galvanized steel sheet as material is subjected to at least one of forming and joining to produce the member.

Here, the galvanized steel sheet has a TS of 780 MPa or more, high YS, excellent ductility, and excellent hole expansion formability. Hence, the member according to one embodiment of the present disclosure has high strength and is particularly suitable for use in complex shaped members used in the automotive field.

[3] Production method for galvanized steel sheet

Next, a production method for a galvanized steel sheet according to one embodiment of the present disclosure will be described.

The production method for a galvanized steel sheet according to one embodiment of the present disclosure comprises: heating (slab heating) a steel slab having the above-described chemical composition under the condition of an average heating rate in the temperature range from 300 °C to 1220 °C of 0.5 °C/sec or less, a slab heating temperature of 1220 °C or more, and a slab heating time of 1.0 hour or more; thereafter hot rolling the steel slab under the condition of a rolling finish temperature of 840 °C or more and 1000 °C or less, an average cooling rate in the temperature range from the rolling finish temperature to 700 °C of 5 °C/sec or more, and a coiling temperature of 620 °C or less, to obtain a hot-rolled steel sheet; thereafter cold rolling the hot-rolled steel sheet under the condition of a rolling reduction ratio of 20 % or more and 80 % or less to obtain a cold-rolled steel sheet; thereafter heating the cold-rolled steel sheet under the condition of an average heating rate in the temperature range from 600 °C to 750 °C of 1 °C/sec or more; thereafter annealing the cold-rolled steel sheet under the condition of an annealing temperature of 750 °C or more and 920 °C or less, an annealing time of 1 second or more and 30 seconds or less, and an atmospheric hydrogen concentration of less than 10 vol%; thereafter cooling the cold-rolled steel sheet under the condition of an average cooling rate in the temperature range from (the annealing temperature - 30 °C) to 600 °C of 5 °C/sec or more and 200 °C/sec or less; and thereafter subjecting the cold-rolled steel sheet to galvanizing treatment.

Here, each temperature is the surface temperature of the steel slab or steel sheet unless otherwise noted.

First, a steel slab having the above-described chemical composition is prepared. For example, steel material is subjected to smelting to obtain molten steel having the above-described chemical composition. The smelting method is not limited, and any known smelting method such as converter or electric furnace may be used. The obtained molten steel is then solidified into a steel slab. The method of obtaining the steel slab from the molten steel is not limited, and continuous casting, ingot casting, or thin slab casting may be used, for example. Continuous casting is preferable from the viewpoint of preventing macrosegregation.

[Slab heating]

The steel slab is then heated. In the production method for a galvanized steel sheet according to one embodiment of the present disclosure, it is important to satisfy the following conditions.

Average heating rate in temperature range from 300 °C to 1220 °C: 0.5 °C/sec or less

After casting the steel slab, the steel slab is cooled to 300°C or less. The steel slab is then heated at an average heating rate in the temperature range from 300 °C to 1220 °C (hereinafter also referred to as "slab heating rate") of 0.5 °C/sec or less. This dissolves precipitates and inclusions (hereinafter also simply referred to as "precipitates") such as coarse MnS and Nb- and Ti-based carbonitrides formed during casting, and reduces coarse precipitates that can serve as crack initiation points. In addition, Mn segregation that has occurred during continuous casting is reduced, thereby greatly contributing to a more uniform area ratio of martensite in the sheet thickness direction of the base steel sheet. The hole expansion formability of the galvanized steel sheet as a finished product is thus improved. The slab heating rate is therefore 0.5 °C/sec or less. The slab heating rate is preferably 0.4 °C/sec or less, and more preferably 0.3 °C/sec or less. No lower limit is placed on the slab heating rate. If the slab heating rate is less than 0.1 °C/sec, the effects are saturated. The slab heating rate is therefore preferably 0.1 °C/sec or more.

The slab heating rate is calculated using the following formula:

Slab heating rate (°C/sec) = (1220 (°C) - 300 (°C))/[Time (sec) for the surface temperature of the steel slab to reach 1220 °C from 300 °C]

Slab heating temperature: 1220 °C or more

If the slab heating temperature is 1220 °C or more, Nb- and Ti-based coarse precipitates formed during casting dissolve sufficiently. Thus, coarse precipitates can be reduced. This improves the hole expansion formability of the galvanized steel sheet as a finished product. The slab heating temperature is therefore 1220 °C or more. The slab heating temperature is preferably 1230 °C or more, and more preferably 1240 °C or more. Although no upper limit is placed on the slab heating temperature, the slab heating temperature is preferably 1400 °C or less, for example. The slab heating temperature is the maximum arrival temperature of the steel slab in slab heating.

Slab heating time: 1.0 hour or more

If the slab heating temperature is 1220 °C or more and the slab heating time is 1.0 hour or more, Nb- and Ti-based coarse precipitates formed during casting dissolve sufficiently. Thus, coarse precipitates can be reduced. This improves the hole expansion formability of the galvanized steel sheet as a finished product. The slab heating time is therefore 1.0 hour or more. The slab heating time is preferably 1.1 hours or more, and more preferably 1.2 hours or more. Although no upper limit is placed on the slab heating time, the slab heating time is preferably 3.0 hours or less, for example. The slab heating time is the holding time in the temperature range of 1220 °C or more.

[Hot rolling]

The steel slab is then hot rolled to obtain a hot-rolled steel sheet. In hot rolling, it is important to satisfy the following conditions.

Rolling finish temperature: 840 °C or more and 1000 °C or less

It is important to suppress concentration of Mn (variation in Mn concentration) in the hot-rolled steel sheet, from the viewpoint of uniformizing the area ratio of martensite in the sheet thickness direction in the base steel sheet of the galvanized steel sheet obtained as a finished product (hereinafter also referred to as "the viewpoint of uniformizing martensite in the sheet thickness direction"). If the rolling finish temperature is less than 840 °C, the formation of ferrite is promoted and ferrite forms excessively before the hot-rolled steel sheet is coiled. This causes concentration of C in untransformed austenite. Excessive concentration of C in untransformed austenite promotes pearlite transformation. In other words, pearlite forms excessively in the steel microstructure of the hot-rolled steel sheet obtained after hot rolling. Pearlite is a layered microstructure of ferrite and cementite, and Mn is concentrated in cementite. This results in variation in Mn concentration. The rolling finish temperature is therefore 840 °C or more. The rolling finish temperature is preferably 850 °C or more. If the rolling finish temperature is excessively high, it may be difficult to cool the steel sheet to the below-described coiling temperature. The rolling finish temperature is therefore 1000 °C or less. The rolling finish temperature is preferably 950 °C or less, and more preferably 920 °C or less.
Average cooling rate in temperature range from rolling finish temperature to 700 °C (hereinafter also referred to as "first cooling rate"): 5 °C/sec or more
It is important to suppress concentration of Mn (variation in Mn concentration) in the hot-rolled steel sheet from the viewpoint of uniformizing martensite in the sheet thickness direction, as mentioned above. If the first cooling rate is low, an excessive amount of ferrite forms during cooling, causing concentration of C in untransformed austenite. Excessive concentration of C in untransformed austenite promotes pearlite transformation. In other words, pearlite forms excessively in the steel microstructure of the hot-rolled steel sheet obtained after hot rolling. As mentioned above, pearlite is a layered microstructure of ferrite and cementite, and Mn is concentrated in cementite. This results in variation in Mn concentration. Moreover, if the first cooling rate is low, precipitates such as carbides and nitrides of Nb or Ti, which can be crack initiation points, coarsen. The first cooling rate is therefore 5 °C/sec or more. The first cooling rate is preferably 10 °C/sec or more, and more preferably 15 °C/sec or more. Although no upper limit is placed on the first cooling rate, the first cooling rate is preferably 1000 °C/sec or less from the viewpoint of energy saving of the cooling line.

Coiling temperature: 620 °C or less

If the coiling temperature is more than 620 °C, pearlite increases excessively during coiling, and concentration of Mn is promoted. When the coiling temperature is lower, the amount of pearlite formed is smaller. Accordingly, a lower coiling temperature is preferable. The coiling temperature is therefore 620 °C or less. The coiling temperature is preferably 600 °C or less, and more preferably 580 °C or less. If the coiling temperature is less than 400 °C, the steel sheet may harden excessively and fracture during cold rolling. The coiling temperature is therefore preferably 400 °C or more. The coiling temperature is more preferably 450 °C or more.

Descaling may be optionally performed in order to remove primary and secondary scale formed on the surface of the hot-rolled steel sheet. It is preferable to thoroughly pickle the hot-rolled steel sheet to reduce the amount of remaining scale before cold rolling the hot-rolled steel sheet. The hot-rolled steel sheet may be optionally subjected to hot-rolled sheet annealing from the viewpoint of reducing the load during cold rolling.

[Cold rolling]

The hot-rolled steel sheet is then cold rolled to obtain a cold-rolled steel sheet.

Rolling reduction ratio: 20 % or more and 80 % or less

The rolling reduction ratio in cold rolling is 20 % or more. If the rolling reduction ratio is less than 20 %, the steel microstructure tends to become coarse and non-uniform in annealing, causing a decrease in the TS and hole expansion formability of the finished product. The rolling reduction ratio is therefore 20 % or more. If the rolling reduction ratio is more than 80 %, the shape of the steel sheet is likely to be defective. There is also a possibility of non-uniform steel microstructure due to temperature unevenness in annealing and non-uniform galvanized coating weight. The rolling reduction ratio is therefore 80 % or less. The rolling reduction ratio is preferably 30 % or more. The rolling reduction ratio is preferably 70 % or less.

[Heating]

The cold-rolled steel sheet is then heated to the annealing temperature. Here, it is important to appropriately control the average heating rate in the temperature range from 600 °C to 750 °C

Average heating rate in temperature range from 600 °C to 750 °C (hereinafter also referred to as "heating rate"): 1 °C/sec or more

When the time during which the cold-rolled steel sheet is retained in the temperature range from 600 °C to 750 °C (hereinafter also referred to as "heating temperature range") in the heating is shorter, the diffusible hydrogen content in the base steel sheet is lower, so that hole expansion formability is improved. If the heating rate is less than 1 °C/sec, the retention time in the heating temperature range increases, and the diffusible hydrogen content in the steel increases. As a result, hole expansion formability decreases. The heating rate is therefore 1 °C/sec or more. The heating rate is preferably 2 °C/sec or more, and more preferably 3 °C/sec or more. Although no upper limit is placed on the heating rate, the heating rate is preferably 15 °C/sec or less, for example. The heating rate is more preferably 12 °C/sec or less, and further preferably 9 °C/sec or less.

[Annealing]

The cold-rolled steel sheet is then annealed under the condition of an annealing temperature of 750 °C or more and 920 °C or less, an annealing time of 1 second or more and 30 seconds or less, and an atmospheric hydrogen concentration of less than 10 vol%.

Annealing temperature: 750 °C or more and 920 °C or less

If the annealing temperature is less than 750 °C, the proportion of austenite formed during heating in the ferrite-austenite dual phase region is insufficient. Consequently, the area ratio of ferrite increases excessively after annealing, and the desired TS cannot be obtained. If the annealing temperature is more than 920 °C, the desired area ratio of ferrite and bainite cannot be obtained and ductility decreases. The annealing temperature is therefore 750 °C or more and 920 °C or less. The annealing temperature is preferably 900 °C or less, and more preferably 880 °C or less. The annealing temperature herein is the maximum arrival temperature in annealing.

Annealing time: 1 second or more and 30 seconds or less

In the production method for a galvanized steel sheet according to one embodiment of the present disclosure, a shorter annealing time is better in order to reduce the diffusible hydrogen content in the base steel sheet to 0.50 mass ppm or less. A shorter annealing time is also preferable in order to suppress coarsening of Nb- and Ti-based carbides. The annealing time is therefore 30 seconds or less. The annealing time is preferably 25 seconds or less, more preferably 20 seconds or less, and further preferably 15 seconds or less. If the annealing time is less than 1 second, coarse Fe-based precipitates do not dissolve, so that elongation decreases. A longer annealing time is preferable from the viewpoint of dissolving coarse MnS as much as possible. The annealing time is therefore 1 second or more. The annealing time is preferably 3 seconds or more, and more preferably 5 seconds or more. The annealing time herein is the holding time at the annealing temperature.

Atmospheric hydrogen concentration: less than 10 vol%

If the atmospheric hydrogen concentration is 10 vol% or more, the diffusible hydrogen content in the base steel sheet is more than 0.50 mass ppm, and hole expansion formability decreases. The atmospheric hydrogen concentration is therefore less than 10 vol%. The atmospheric hydrogen concentration is preferably less than 9 vol%, and more preferably less than 8 vol%. No lower limit is placed on the atmospheric hydrogen concentration. If the atmospheric hydrogen concentration is less than 1 vol%, however, the reduction effect of hydrogen in annealing decreases, and oxides form on the surface of the base steel sheet. As a result, the coating weight may decrease. The atmospheric hydrogen concentration is therefore preferably 1 vol% or more. The atmospheric hydrogen concentration is more preferably 2 vol% or more.

In the above-described heating, the atmospheric hydrogen concentration is preferably less than 10 vol% as in the annealing.

[Cooling]

The cold-rolled steel sheet annealed as described above is then cooled under the following conditions.

Average cooling rate in temperature range from (annealing temperature - 30 °C) to 600 °C: 5 °C/sec or more and 200 °C/sec or less

In cooling, it is necessary to appropriately control the cooling rate, particularly the average cooling rate in the temperature range from (annealing temperature - 30 °C) to 600 °C (hereinafter also referred to as "second cooling rate") in order to reduce the diffusible hydrogen content in the base steel sheet to 0.50 mass ppm or less. If the second cooling rate is excessively low, the retention time at high temperature increases and the diffusible hydrogen content in the base steel sheet increases. The second cooling rate is therefore 5 °C/sec or more. The second cooling rate is preferably 7 °C/sec or more, and more preferably 9 °C/sec or more. If the second cooling rate is more than 200 °C/sec, diffusible hydrogen that has entered the cold-rolled steel sheet during annealing cannot be desorbed during cooling, and the diffusible hydrogen content in the base steel sheet may increase. The second cooling rate is therefore 200 °C/sec or less. The second cooling rate is preferably 100 °C/sec or less, and more preferably 75 °C/sec or less.

Conditions other than above are not limited. For example, the cooling stop temperature may be set to 400°C or more and 600°C or less, and the cold-rolled steel sheet may be optionally held in the temperature range of 400°C or more and 600°C or less for 10 seconds or more and 150 seconds or less before the below-described galvanizing treatment. Alternatively, the cooling stop temperature may be set to 25 °C or more and 400 °C or less, and after reaching the cooling stop temperature, the cold-rolled steel sheet may be reheated to the temperature range of (cooling stop temperature + 50 °C) or more and 550 °C or less and optionally held for 10 seconds or more and 150 seconds or less before the below-described galvanizing treatment.

[Galvanizing treatment]

The cold-rolled steel sheet is then subjected to galvanizing treatment to obtain a galvanized steel sheet. Examples of the galvanizing treatment include hot-dip galvanizing treatment and galvannealing treatment. The treatment conditions may be in accordance with conventional methods.

For example, in the case of hot-dip galvanizing treatment, it is preferable to immerse the cold-rolled steel sheet in a galvanizing bath at 440 °C or more and 500 °C or less and then adjust the coating weight by gas wiping or the like. The galvanizing bath is not limited as long as the composition of the galvanized layer described above is obtained. For example, a galvanizing bath having an Al content of 0.10 mass% or more and 0.23 mass% or less with the balance consisting of Zn and inevitable impurities is preferably used.

In the case of galvannealing treatment, it is preferable to perform hot-dip galvanizing treatment in the above-described manner and then perform alloying treatment in the temperature range of 450 °C or more and 600 °C or less. If the alloying temperature is less than 450 °C, the Zn-Fe alloying rate is excessively slow and alloying may be hindered. If the alloying temperature is more than 600 °C, untransformed austenite may transform into pearlite, causing decreases in TS and ductility. The alloying temperature in the alloying treatment is therefore preferably 450 °C or more and 600 °C or less. The alloying temperature in the alloying treatment is more preferably 460 °C or more, and further preferably 470 °C or more. The alloying temperature in the alloying treatment is more preferably 580 °C or less, and further preferably 560 °C or less.

The coating weight is preferably 20 g/m$^2$ or more and 80 g/m$^2$ or less per side. The coating weight can be adjusted by gas wiping or the like.

[Temper rolling]

The galvanized steel sheet obtained as described above may be further subjected to temper rolling. In this case, the elongation rate is preferably 0.10 % or more for the purpose of shape adjustment and surface roughness adjustment as well as for the purpose of stably obtaining high YS. The elongation rate is more preferably 0.15 % or more, and further preferably 0.20 % or more. No upper limit is placed on the elongation rate. If the elongation rate is more than 2.00 %, however, YS may increase excessively, causing a decrease in dimensional accuracy when the galvanized steel sheet is formed into a member. The elongation rate is therefore preferably 2.00 % or less.

Temper rolling may be performed by a device continuous with the annealing device for performing each process (i.e. online). Temper rolling may be performed by a device not continuous with the annealing device for performing each process (i.e. offline). The number of times temper rolling is performed may be one, or two or more. Rolling by a leveler or the like may be performed as long as the same elongation rate as in temper rolling can be achieved.

It is preferable to perform a series of treatments such as the above-described annealing and galvanizing treatment in a continuous annealing line (CAL) or a continuous galvanizing line (CGL) which is a hot-dip galvanizing line, from the viewpoint of productivity. After hot-dip galvanizing treatment, wiping may be performed to adjust the coating weight.

Conditions other than those described above are not limited and may be in accordance with conventional methods. The above-described production method for a galvanized steel sheet according to one embodiment of the present disclosure enables obtaining a galvanized steel sheet having high strength, high YS, excellent ductility, and excellent hole expansion formability, which is suitable for use in automotive members and the like.

[4] Production method for member

Next, a production method for a member according to one embodiment of the present disclosure will be described.

The production method for a member according to one embodiment of the present disclosure comprises subjecting the above-described galvanized steel sheet to at least one of forming and joining to obtain a member.

The forming method is not limited and, for example, a typical processing method such as press forming may be used. The joining method is not limited and, for example, typical welding such as spot welding, laser welding, or arc welding, riveting, or caulking may be used. Forming conditions and joining conditions are not limited, and may be in accordance with conventional methods.

EXAMPLES

Steel materials having the chemical compositions shown in Table 1 (the balance consisting of Fe and inevitable impurities) were each smelted in a converter and continuously cast to obtain a steel slab. Following this, the steel slab was heated under the conditions shown in Table 2, and then subjected to hot rolling consisting of rough rolling and finish rolling to obtain a hot-rolled steel sheet. The slab heating rate and the slab heating time of No. 14 are respectively the average heating rate from 300 °C to the slab heating temperature and the holding time at the slab heating temperature. The obtained hot-rolled steel sheet was then pickled and subjected to cold rolling under the conditions shown in Table 2 to obtain a cold-rolled steel sheet. Next, the obtained cold-rolled steel sheet was subjected to heating, annealing, cooling, and galvanizing treatment under the conditions shown in Table 2. This yielded a steel sheet as a finished product. Conditions not specified were in accordance with conventional methods.

In the galvanizing treatment, hot-dip galvanizing treatment or galvannealing treatment was performed to obtain a hot-dip galvanized steel sheet (hereinafter also referred to as "GI") or a galvannealed steel sheet (hereinafter also referred to as "GA"). In Table 2, "GI" and "GA" each indicate the type of galvanizing treatment.

In hot-dip galvanizing treatment, a galvanizing bath having a composition containing Al: 0.20 mass% with the balance consisting of Zn and inevitable impurities was used. The galvanizing bath temperature was 470 °C. The coating weight was about 45 $g/m^2$ to 72 $g/m^2$ per side (double-sided coating). The composition of the galvanized layer of the finally obtained GI contained Fe: 0.1 mass% to 1.0 mass% and Al: 0.2 mass% to 1.0 mass% with the balance consisting of Zn and inevitable impurities.

In galvannealing treatment, a galvanizing bath having a composition containing Al: 0.14 mass% with the balance consisting of Zn and inevitable impurities was used. The galvanizing bath temperature was 470 °C. The coating weight was about 45 $g/m^2$ per side (double-sided coating). The alloying temperature was 520 °C. The composition of the galvanized layer of the finally obtained GA contained Fe: 7 mass% to 15 mass% and Al: 0.1 mass% to 1.0 mass% with the balance consisting of Zn and inevitable impurities.

The steel sheets thus obtained were each used to identify the steel microstructure of the base steel sheet and to measure the number density of MnS particle groups, $M_C/M_Q$, and diffusible hydrogen content according to the above-described procedures. The measurement results are shown in Table 3.

Moreover, a tensile test and a hole expanding test were conducted according to the following procedures, and the tensile strength (TS), yield stress (YS), total elongation (El), and maximum hole expansion ratio ($\lambda$) were evaluated based on the following criteria.

- TS

Pass:

$$780 \text{ MPa} \leq \text{TS}$$

Fail:

$$\text{TS} < 780 \text{ MPa}$$

- YS

Pass:

$$420 \text{ MPa} \leq \text{YS when } 780 \text{ MPa} \leq \text{TS} < 980 \text{ MPa}$$

$$550 \text{ MPa} \leq \text{YS when } 980 \text{ MPa} \leq \text{TS}$$

Fail:

$$\text{YS} < 420 \text{ MPa when } 780 \text{ MPa} \leq \text{TS} < 980 \text{ MPa}$$

$$\text{YS} < 550 \text{ MPa when } 980 \text{ MPa} \leq \text{TS}$$

- El

Pass:

$$15 \% \leq \text{El when } 780 \text{ MPa} \leq \text{TS} < 980 \text{ MPa}$$

$$9 \% \leq \text{El when } 980 \text{ MPa} \leq \text{TS}$$

Fail:

$$\text{El} < 15 \% \text{ when } 780 \text{ MPa} \leq \text{TS} < 980 \text{ MPa}$$

$$\text{El} < 9 \% \text{ when } 980 \text{ MPa} \leq \text{TS}$$

- $\lambda$

Pass:

$$20 \% \leq \lambda$$

Fail:

$$\lambda < 20 \%$$

The tensile test was conducted in accordance with JIS Z 2241. In detail, a JIS No. 5 test piece was collected from the obtained galvanized steel sheet so that the longitudinal direction would be orthogonal to the rolling direction of the base steel sheet. The tensile test was conducted using the collected test piece at a crosshead speed of 10 mm/min to measure TS, YS, and El. The results are shown in Table 3.

The hole expanding test was conducted in accordance with JIS Z 2256. In detail, a test piece of 100 mm × 100 mm was collected from the obtained galvanized steel sheet by shearing. A hole with a diameter of 10 mm was drilled through the test piece with clearance 12.5 %. In a state in which a blank holding force of 9 tons (88.26 kN) was applied to the periphery of the hole of the test piece using a die having an inner diameter of 75 mm to hold the test piece, a conical punch with an apical angle of 60° was pushed into the hole, and the hole diameter of the test piece at crack initiation limit (at the time of occurrence of cracking) was measured. The maximum hole expansion ratio λ (%) was then calculated using the following formula. The results are shown in Table 3.

$$\lambda \ (\%) = \{(D_f - D_0)/D_0\} \times 100$$

where $D_f$ is the hole diameter of the test piece at the time of occurrence of cracking (mm), and $D_0$ is the initial hole diameter of the test piece (mm).

[Table 1]

Table 1

| Steel sample ID | Chemical composition (mass%) | | | | | | | | | | | | Remarks |
|---|---|---|---|---|---|---|---|---|---|---|---|---|---|
| | C | Si | Mn | P | S | sol.Al | N | Nb | Ti | Nb+Ti | C+Mn/5 | Others | |
| A | 0.06 | 1.0 | 2.7 | 0.009 | 0.0017 | 0.042 | 0.0036 | 0.031 | 0.016 | 0.047 | 0.60 | - | Conforming steel |
| B | 0.19 | 1.2 | 2.2 | 0.014 | 0.0012 | 0.039 | 0.0037 | 0.014 | 0.035 | 0.049 | 0.63 | - | Conforming steel |
| C | 0.18 | 0.2 | 2.0 | 0.019 | 0.0012 | 0.042 | 0.0027 | 0.009 | 0.036 | 0.045 | 0.58 | - | Conforming steel |
| D | 0.13 | 1.6 | 2.4 | 0.011 | 0.0029 | 0.043 | 0.0030 | 0.036 | 0.043 | 0.079 | 0.61 | - | Conforming steel |
| E | 0.18 | 0.9 | 1.6 | 0.009 | 0.0031 | 0.043 | 0.0030 | 0.037 | 0.017 | 0.054 | 0.50 | - | Conforming steel |
| F | 0.06 | 0.6 | 2.9 | 0.013 | 0.0031 | 0.046 | 0.0028 | 0.014 | 0.025 | 0.039 | 0.64 | - | Conforming steel |
| G | 0.14 | 0.8 | 2.5 | 0.016 | 0.0023 | 0.700 | 0.0024 | 0.020 | 0.031 | 0.051 | 0.64 | - | Conforming steel |
| H | 0.15 | 1.0 | 2.4 | 0.010 | 0.0016 | 0.046 | 0.0033 | 0.003 | 0.006 | 0.009 | 0.63 | - | Conforming steel |
| I | 0.16 | 1.2 | 2.3 | 0.011 | 0.0027 | 0.046 | 0.0035 | 0.100 | 0.090 | 0.190 | 0.62 | - | Conforming steel |
| J | 0.09 | 1.5 | 2.7 | 0.018 | 0.0021 | 0.038 | 0.0033 | 0.028 | - | 0.028 | 0.63 | - | Conforming steel |
| K | 0.09 | 0.7 | 2.4 | 0.012 | 0.0030 | 0.045 | 0.0046 | - | 0.041 | 0.041 | 0.57 | - | Conforming steel |
| L | 0.16 | 0.4 | 2.3 | 0.020 | 0.0031 | 0.040 | 0.0025 | 0.030 | 0.021 | 0.051 | 0.62 | - | Conforming steel |
| M | 0.11 | 0.9 | 2.5 | 0.020 | 0.0015 | 0.036 | 0.0032 | 0.029 | 0.026 | 0.055 | 0.61 | - | Conforming steel |
| N | 0.15 | 0.6 | 2.3 | 0.019 | 0.0031 | 0.036 | 0.0037 | 0.021 | 0.027 | 0.048 | 0.61 | B:0.002,V:0.008,Sb:0.010 | Conforming steel |
| O | 0.18 | 0.5 | 2.1 | 0.010 | 0.0014 | 0.040 | 0.0029 | 0.016 | 0.031 | 0.047 | 0.60 | Mo:0.05,Sn:0.005 | Conforming steel |
| P | 0.10 | 0.7 | 2.8 | 0.017 | 0.0024 | 0.037 | 0.0038 | 0.027 | 0.016 | 0.043 | 0.66 | Cu:0.05, Zr:0.007, Mg:0.0006 | Conforming steel |
| Q | 0.13 | 1.0 | 2.7 | 0.009 | 0.0012 | 0.036 | 0.0030 | 0.010 | 0.041 | 0.051 | 0.67 | Sb:0.008, W:0.005 | Conforming steel |
| R | 0.13 | 0.7 | 2.7 | 0.016 | 0.0012 | 0.035 | 0.0025 | 0.064 | 0.014 | 0.078 | 0.67 | Ni:0.02, Sn:0.006, Cr:0.10 | Conforming steel |
| S | 0.17 | 0.5 | 1.8 | 0.017 | 0.0015 | 0.035 | 0.0024 | 0.015 | 0.024 | 0.039 | 0.53 | Sb0.010, Cr:0.25 | Conforming steel |
| T | 0.10 | 0.5 | 2.7 | 0.009 | 0.0026 | 0.039 | 0.0035 | 0.026 | 0.017 | 0.043 | 0.64 | Ca:0.0030, Ta:0.004 | Conforming steel |
| U | 0.12 | 0.9 | 2.4 | 0.011 | 0.0012 | 0.038 | 0.0036 | 0.038 | 0.040 | 0.078 | 0.60 | B:0.002, Sb:0.010, Mo:0.01 | Conforming steel |
| V | 0.14 | 0.8 | 2.3 | 0.009 | 0.0025 | 0.038 | 0.0024 | 0.009 | 0.036 | 0.045 | 0.60 | Cs:0.0006, Se:0.001 | Conforming steel |
| W | 0.16 | 1.0 | 2.1 | 0.011 | 0.0011 | 0.045 | 0.0040 | 0.034 | 0.040 | 0.074 | 0.58 | Cu:0.10, Co:0.007 | Conforming steel |

(continued)

| Steel sample ID | Chemical composition (mass%) | | | | | | | | | | | | Remarks |
|---|---|---|---|---|---|---|---|---|---|---|---|---|---|
| | C | Si | Mn | P | S | sol.Al | N | Nb | Ti | Nb+Ti | C+Mn/5 | Others | |
| X | 0.18 | 0.4 | 1.9 | 0.018 | 0.0012 | 0.045 | 0.0035 | 0.033 | - | 0.033 | 0.56 | Zr:0.01, Ca:0.003 | Conforming steel |
| Y | 0.17 | 0.7 | 2.2 | 0.010 | 0.0019 | 0.035 | 0.0040 | - | 0.026 | 0.026 | 0.61 | B:0.002, Hf:0.0004 | Conforming steel |
| Z | 0.12 | 0.7 | 2.6 | 0.012 | 0.0015 | 0.046 | 0.0030 | 0.022 | 0.030 | 0.052 | 0.64 | Ge:0.001, Sr:0.0003, Zn:0.007 | Conforming steel |
| AA | 0.11 | 1.1 | 2.6 | 0.013 | 0.0017 | 0.043 | 0.0025 | 0.028 | 0.022 | 0.050 | 0.63 | Te:0.0007, Pb:0.009 | Conforming steel |
| AB | 0.17 | 0.6 | 1.7 | 0.017 | 0.0024 | 0.041 | 0.0029 | 0.014 | 0.028 | 0.042 | 0.51 | Cr:0.08, Bi:0.0003 | Conforming steel |
| AC | 0.13 | 1.0 | 2.3 | 0.019 | 0.0023 | 0.040 | 0.0040 | 0.039 | 0.036 | 0.075 | 0.59 | Co:0.008,Te:0.0002 | Conforming steel |
| AD | 0.12 | 1.5 | 2.6 | 0.019 | 0.0014 | 0.042 | 0.0032 | 0.014 | 0.021 | 0.035 | 0.64 | As:0.0008, REM:0.0002 | Conforming steel |
| AE | 0.04 | 0.7 | 2.3 | 0.019 | 0.0025 | 0.044 | 0.0029 | 0.032 | 0.036 | 0.068 | 0.50 | - | Comparative steel |
| AF | 0.22 | 0.9 | 2.3 | 0.018 | 0.0025 | 0.038 | 0.0026 | 0.020 | 0.012 | 0.032 | 0.68 | - | Comparative steel |
| AG | 0.14 | 0.04 | 2.1 | 0.019 | 0.0010 | 0.040 | 0.0040 | 0.036 | 0.025 | 0.061 | 0.56 | - | Comparative steel |
| AH | 0.18 | 0.9 | 1.4 | 0.014 | 0.0017 | 0.034 | 0.0035 | 0.030 | 0.043 | 0.073 | 0.46 | - | Comparative steel |
| AI | 0.10 | 0.9 | 3.2 | 0.020 | 0.0017 | 0.044 | 0.0040 | 0.012 | 0.034 | 0.046 | 0.74 | - | Comparative steel |
| AJ | 0.15 | 0.8 | 2.2 | 0.130 | 0.0023 | 0.045 | 0.0035 | 0.035 | 0.017 | 0.052 | 0.59 | - | Comparative steel |
| AK | 0.13 | 1.0 | 2.6 | 0.019 | 0.0700 | 0.042 | 0.0038 | 0.024 | 0.021 | 0.045 | 0.65 | - | Comparative steel |
| AL | 0.13 | 1.0 | 2.1 | 0.015 | 0.0023 | 0.042 | 0.0037 | - | 0.001 | 0.001 | 0.55 | - | Comparative steel |
| AM | 0.12 | 0.9 | 2.0 | 0.009 | 0.0031 | 0.039 | 0.0038 | 0.001 | - | 0.001 | 0.52 | - | Comparative steel |
| AN | 0.15 | 0.9 | 2.3 | 0.014 | 0.0015 | 0.038 | 0.0036 | 0.160 | 0.070 | 0.230 | 0.61 | - | Comparative steel |
| AO | 0.11 | 1.0 | 2.2 | 0.010 | 0.0011 | 0.042 | 0.0039 | - | 0.210 | 0.210 | 0.55 | - | Comparative steel |
| AP | 0.12 | 1.2 | 1.9 | 0.014 | 0.0015 | 0.036 | 0.0033 | 0.220 | - | 0.220 | 0.50 | - | Comparative steel |
| AQ | 0.17 | 1.1 | 2.7 | 0.012 | 0.0012 | 0.041 | 0.0040 | 0.044 | 0.019 | 0.063 | 0.71 | - | Comparative steel |

[Table 2]

Table 2

| No. | Steel sample ID | Slab heating | | | Hot rolling | | | Cold rolling | Heating | Annealing | | | Cooling | | Galvanizing treatment | Temper rolling | Remarks |
|---|---|---|---|---|---|---|---|---|---|---|---|---|---|---|---|---|---|
| | | Slab heating rate (°C/s) | Slab heating temperature (°C) | Slab heating time (hr) | Rolling finish temperature (°C) | First cooling rate (°C/s) | Coiling temperature (°C) | Rolling reduction ratio (%) | Heating rate (°C/s) | Annealing temperature (°C) | Annealing time (s) | Atmospheric hydrogen concentration (vol%) | Second cooling rate (°C/s) | Cooling stop temperature (°C) | Type | Elongation rate (%) | |
| 1 | A | 0.2 | 1240 | 1.8 | 910 | 20 | 480 | 49 | 6 | 830 | 11 | 3 | 43 | 480 | GA | 0.40 | Example |
| 2 | B | 0.2 | 1230 | 1.5 | 860 | 20 | 500 | 52 | 6 | 820 | 15 | 5 | 26 | 470 | GI | 0.30 | Example |
| 3 | C | 0.3 | 1250 | 1.6 | 900 | 20 | 510 | 42 | 4 | 820 | 11 | 4 | 11 | 500 | GA | 0.50 | Example |
| 4 | D | 0.2 | 1260 | 1.9 | 910 | 20 | 480 | 57 | 8 | 830 | 15 | 5 | 52 | 350 | GA | 0.20 | Example |
| 5 | E | 0.2 | 1250 | 1.0 | 860 | 20 | 480 | 50 | 7 | 850 | 10 | 5 | 48 | 500 | CR | 0.20 | Example |
| 6 | F | 0.2 | 1260 | 1.8 | 860 | 20 | 540 | 41 | 4 | 830 | 11 | 5 | 43 | 200 | GA | 0.60 | Example |
| 7 | G | 0.2 | 1250 | 1.7 | 880 | 30 | 510 | 40 | 5 | 850 | 7 | 5 | 38 | 480 | GI | 0.40 | Example |
| 8 | H | 0.2 | 1250 | 1.7 | 860 | 30 | 580 | 52 | 4 | 810 | 9 | 3 | 24 | 490 | GI | 0.60 | Example |
| 9 | I | 0.3 | 1240 | 1.4 | 880 | 20 | 500 | 57 | 6 | 880 | 12 | 3 | 41 | 300 | GA | 0.50 | Example |
| 10 | J | 0.2 | 1230 | 1.2 | 900 | 30 | 510 | 41 | 4 | 830 | 14 | 4 | 39 | 460 | GI | 0.20 | Example |
| 11 | K | 0.3 | 1220 | 1.1 | 860 | 30 | 490 | 46 | 5 | 840 | 12 | 4 | 27 | 470 | GA | 0.20 | Example |
| 12 | L | 0.3 | 1240 | 1.3 | 910 | 30 | 510 | 51 | 7 | 830 | 13 | 4 | 43 | 510 | GI | 0.60 | Example |
| 13 | L | <u>0.8</u> | 1230 | 1.3 | 910 | 30 | 510 | 39 | 7 | 840 | 15 | 5 | 43 | 530 | GI | 0.50 | Comparative Example |
| 14 | L | 0.2 | <u>1120</u> | 1.8 | 890 | 20 | 590 | 53 | 6 | 790 | 9 | 5 | 37 | 520 | GI | 0.60 | Comparative Example |
| 15 | L | 0.2 | 1230 | <u>0.4</u> | 860 | 20 | 470 | 39 | 8 | 840 | 9 | 3 | 22 | 500 | GI | 0.60 | Comparative Example |
| 16 | L | 0.2 | 1250 | 1.1 | <u>720</u> | 20 | 560 | 49 | 4 | 850 | 15 | 4 | 49 | 450 | GI | 0.20 | Comparative Example |
| 17 | L | 0.2 | 1250 | 1.3 | 900 | <u>3</u> | 550 | 42 | 8 | 780 | 15 | 4 | 26 | 470 | GA | 0.40 | Comparative Example |
| 18 | L | 0.2 | 1260 | 1.9 | 910 | 30 | <u>750</u> | 39 | 7 | 850 | 14 | 5 | 44 | 480 | GA | 0.30 | Comparative Example |

23

EP 4 613 899 A1

(continued)

EP 4 613 899 A1

| No. | Steel sample ID | Slab heating | | | Hot rolling | | | Cold rolling | Heating | Annealing | | | Cooling | | Galvanizing treatment | Temper rolling | Remarks |
|---|---|---|---|---|---|---|---|---|---|---|---|---|---|---|---|---|---|
| | | Slab heating rate (°C/s) | Slab heating temperature (°C) | Slab heating time (hr) | Rolling finish temperature (°C) | First cooling rate (°C/s) | Coiling temperature (°C) | Rolling reduction ratio (%) | Heating rate (°C/s) | Annealing temperature (°C) | Annealing time (s) | Atmospheric hydrogen concentration (vol%) | Second cooling rate (°C/s) | Cooling stop temperature (°C) | Type | Elongation rate (%) | |
| 19 | M | 0.3 | 1250 | 1.9 | 860 | 20 | 510 | 12 | 5 | 780 | 8 | 4 | 41 | 530 | GI | 0.20 | Comparative Example |
| 20 | M | 0.3 | 1230 | 1.0 | 900 | 20 | 560 | 44 | 0.3 | 860 | 12 | 5 | 26 | 510 | GI | 0.30 | Comparative Example |
| 21 | M | 0.3 | 1260 | 1.6 | 870 | 20 | 590 | 45 | 8 | 730 | 4 | 5 | 24 | 530 | GI | 0.60 | Comparative Example |
| 22 | M | 0.2 | 1260 | 1.4 | 890 | 20 | 530 | 39 | 7 | 980 | 7 | 3 | 42 | 500 | GI | 0.50 | Comparative Example |
| 23 | M | 0.2 | 1270 | 1.2 | 910 | 20 | 560 | 43 | 4 | 810 | 0.3 | 5 | 34 | 460 | GI | 0.40 | Comparative Example |
| 24 | M | 0.3 | 1250 | 1.5 | 910 | 30 | 500 | 54 | 7 | 800 | 50 | 5 | 26 | 500 | GA | 0.30 | Comparative Example |
| 25 | M | 0.3 | 1260 | 1.3 | 900 | 30 | 480 | 54 | 4 | 810 | 8 | 3 | 3 | 460 | GI | 0.20 | Comparative Example |
| 26 | M | 0.2 | 1250 | 1.6 | 870 | 30 | 520 | 52 | 4 | 850 | 14 | 3 | 250 | 200 | GA | 0.20 | Comparative Example |
| 27 | M | 0.2 | 1230 | 1.1 | 900 | 20 | 510 | 49 | 7 | 820 | 8 | 15 | 22 | 470 | GA | 0.50 | Comparative Example |
| 28 | M | 0.2 | 1250 | 1.6 | 900 | 30 | 550 | 39 | 6 | 810 | 13 | 3 | 27 | 500 | GI | 0.60 | Example |
| 29 | M | 0.2 | 1220 | 1.7 | 890 | 30 | 510 | 49 | 4 | 810 | 10 | 5 | 35 | 490 | GI | 0.05 | Example |
| 30 | N | 0.3 | 1270 | 1.9 | 900 | 30 | 500 | 50 | 8 | 790 | 8 | 4 | 35 | 420 | GI | 0.40 | Example |

[Table 2(cont'd)]

| No. | Steel sample ID | Slab heating | | | Hot rolling | | | Cold rolling | Heating | Annealing | | | Cooling | | Galvanizing treatment | Temper rolling | Remarks |
|---|---|---|---|---|---|---|---|---|---|---|---|---|---|---|---|---|---|
| | | Slab heating rate (°C/s) | Slab heating temperature (°C) | Slab heating time (hr) | Rolling finish temperature (°C) | First cooling rate (°C/s) | Coiling temperature (°C) | Rolling reduction ratio (%) | Heating rate (°C/s) | Annealing temperature (°C) | Annealing time (s) | Atmospheric hydrogen concentration (vol%) | Second cooling rate (°C/s) | Cooling stop temperature (°C) | Type | Elongation rate (%) | |
| 31 | O | 0.2 | 1250 | 1.0 | 880 | 20 | 510 | 43 | 4 | 840 | 11 | 3 | 20 | 500 | CR | 0.20 | Example |
| 32 | P | 0.3 | 1250 | 1.3 | 900 | 30 | 470 | 53 | 8 | 820 | 13 | 3 | 33 | 500 | GI | 0.40 | Example |
| 33 | Q | 0.2 | 1260 | 1.4 | 890 | 30 | 550 | 47 | 4 | 840 | 9 | 3 | 33 | 50 | GI | 0.20 | Example |
| 34 | R | 0.3 | 1240 | 1.0 | 890 | 20 | 500 | 52 | 4 | 800 | 9 | 4 | 14 | 400 | GA | 0.20 | Example |
| 35 | S | 0.3 | 1260 | 1.1 | 910 | 30 | 510 | 50 | 6 | 830 | 14 | 3 | 39 | 500 | GI | 0.40 | Example |
| 36 | T | 0.3 | 1260 | 1.0 | 860 | 20 | 480 | 48 | 7 | 830 | 7 | 4 | 35 | 300 | GA | 0.30 | Example |
| 37 | U | 0.2 | 1270 | 1.2 | 910 | 30 | 500 | 42 | 8 | 830 | 10 | 3 | 40 | 500 | GI | 0.70 | Example |
| 38 | V | 0.3 | 1250 | 1.1 | 870 | 20 | 590 | 55 | 4 | 800 | 8 | 4 | 33 | 460 | GI | 0.40 | Example |
| 39 | W | 0.2 | 1260 | 1.6 | 870 | 30 | 570 | 42 | 4 | 840 | 9 | 5 | 26 | 460 | CR | 0.50 | Example |
| 40 | X | 0.3 | 1250 | 1.1 | 910 | 20 | 480 | 45 | 4 | 850 | 10 | 3 | 12 | 520 | GI | 0.60 | Example |
| 41 | Y | 0.3 | 1230 | 1.8 | 900 | 20 | 510 | 53 | 6 | 820 | 15 | 5 | 44 | 480 | GI | 0.20 | Example |
| 42 | Z | 0.3 | 1250 | 1.1 | 900 | 30 | 530 | 42 | 8 | 820 | 13 | 3 | 32 | 460 | CR | 0.40 | Example |
| 43 | AA | 0.3 | 1220 | 1.2 | 880 | 20 | 500 | 39 | 6 | 810 | 9 | 3 | 30 | 500 | GA | 0.60 | Example |
| 44 | AB | 0.3 | 1270 | 1.1 | 870 | 20 | 580 | 56 | 7 | 830 | 10 | 5 | 21 | 470 | GI | 0.50 | Example |
| 45 | AC | 0.2 | 1270 | 1.9 | 860 | 30 | 560 | 50 | 5 | 840 | 11 | 4 | 36 | 530 | GI | 0.60 | Example |
| 46 | AD | 0.2 | 1220 | 1.4 | 870 | 20 | 480 | 45 | 8 | 820 | 15 | 3 | 35 | 250 | GI | 0.50 | Example |
| 47 | AE | 0.2 | 1250 | 1.1 | 900 | 20 | 560 | 39 | 5 | 800 | 9 | 3 | 40 | 490 | GA | 0.40 | Comparative Example |
| 48 | AF | 0.2 | 1280 | 1.3 | 890 | 30 | 510 | 47 | 4 | 830 | 11 | 3 | 44 | 510 | GI | 0.60 | Comparative Example |
| 49 | AG | 0.2 | 1280 | 1.1 | 890 | 30 | 490 | 45 | 8 | 850 | 14 | 4 | 19 | 520 | GA | 0.60 | Comparative Example |
| 50 | AH | 0.3 | 1280 | 1.6 | 910 | 30 | 590 | 44 | 5 | 790 | 13 | 5 | 46 | 470 | GI | 0.20 | Comparative Example |

(continued)

| No. | Steel sample ID | Slab heating | | | Hot rolling | | | Cold rolling | Heating | Annealing | | | Cooling | | Galvanizing treatment | Temper rolling | Remarks |
|---|---|---|---|---|---|---|---|---|---|---|---|---|---|---|---|---|---|
| | | Slab heating rate (°C/s) | Slab heating temperature (°C) | Slab heating time (hr) | Rolling finish temperature (°C) | First cooling rate (°C/s) | Coiling temperature (°C) | Rolling reduction ratio (%) | Heating rate (°C/s) | Annealing temperature (°C) | Annealing time (s) | Atmospheric hydrogen concentration (vol%) | Second cooling rate (°C/s) | Cooling stop temperature (°C) | Type | Elongation rate (%) | |
| 51 | AI | 0.3 | 1230 | 1.2 | 880 | 20 | 590 | 40 | 4 | 790 | 12 | 5 | 43 | 530 | GI | 0.30 | Comparative Example |
| 52 | AJ | 0.2 | 1260 | 1.2 | 890 | 20 | 520 | 52 | 7 | 840 | 10 | 3 | 46 | 470 | GI | 0.30 | Comparative Example |
| 53 | AK | 0.2 | 1230 | 1.0 | 860 | 30 | 530 | 51 | 8 | 780 | 10 | 4 | 38 | 510 | GA | 0.20 | Comparative Example |
| 54 | AL | 0.3 | 1230 | 1.6 | 900 | 30 | 510 | 51 | 7 | 840 | 9 | 4 | 50 | 520 | GI | 0.20 | Comparative Example |
| 55 | AM | 0.3 | 1250 | 1.8 | 900 | 30 | 590 | 40 | 4 | 860 | 13 | 3 | 50 | 530 | GA | 0.60 | Comparative Example |
| 56 | AN | 0.3 | 1240 | 1.5 | 890 | 30 | 470 | 46 | 8 | 810 | 13 | 3 | 13 | 480 | GI | 0.50 | Comparative Example |
| 57 | AO | 0.3 | 1250 | 1.1 | 880 | 30 | 510 | 49 | 8 | 800 | 14 | 3 | 23 | 460 | GI | 0.60 | Comparative Example |
| 58 | AP | 0.2 | 1250 | 1.8 | 860 | 20 | 570 | 41 | 8 | 810 | 15 | 4 | 35 | 530 | GA | 0.50 | Comparative Example |
| 59 | AQ | 0.2 | 1230 | 1.8 | 890 | 20 | 550 | 47 | 8 | 790 | 9 | 5 | 48 | 490 | GI | 0.60 | Comparative Example |

EP 4 613 899 A1

[Table 3]

[Table 3]

Table 3

| No. | Steel sample ID | Steel microstructure of base steel sheet | | | | | Diffusible hydrogen content in base steel sheet (mass ppm) | Properties | | | | Remarks |
|---|---|---|---|---|---|---|---|---|---|---|---|---|
| | | Area ratio (%) | | | Number density of MnS particle groups (/mm$^2$) | $M_C/M_Q$ | | TS (MPa) | YS (MPa) | El (%) | λ (%) | |
| | | Ferrite + Bainite | Martensite | Retained austenite | | | | | | | | |
| 1 | A | 34 | 64 | 2 | 3 | 1.4 | 0.35 | 1037 | 705 | 15 | 25 | Example |
| 2 | B | 32 | 55 | 13 | 2 | 1.5 | 0.38 | 1058 | 703 | 18 | 23 | Example |
| 3 | C | 39 | 40 | 16 | 3 | 1.1 | 0.35 | 846 | 496 | 24 | 24 | Example |
| 4 | D | 43 | 51 | 5 | 1 | 1.4 | 0.31 | 918 | 654 | 20 | 29 | Example |
| 5 | E | 29 | 62 | 9 | 3 | 1.5 | 0.37 | 795 | 525 | 22 | 27 | Example |
| 6 | F | 26 | 73 | 1 | 3 | 1.3 | 0.29 | 1061 | 918 | 13 | 38 | Example |
| 7 | G | 55 | 35 | 10 | 1 | 1.4 | 0.28 | 996 | 721 | 18 | 31 | Example |
| 8 | H | 36 | 53 | 11 | 2 | 1.5 | 0.33 | 1050 | 668 | 18 | 23 | Example |
| 9 | I | 24 | 69 | 7 | 2 | 1.5 | 0.35 | 1043 | 936 | 16 | 37 | Example |
| 10 | J | 44 | 51 | 5 | 1 | 1.2 | 0.35 | 1017 | 704 | 17 | 26 | Example |
| 11 | K | 28 | 65 | 7 | 2 | 1.4 | 0.38 | 968 | 688 | 16 | 26 | Example |
| 12 | L | 24 | 69 | 7 | 2 | 1.5 | 0.42 | 1152 | 755 | 13 | 23 | Example |
| 13 | L | 24 | 69 | 7 | 8 | 2.1 | 0.44 | 1162 | 765 | 13 | 17 | Comparative Example |
| 14 | L | 35 | 56 | 9 | 9 | 2.2 | 0.34 | 1061 | 614 | 16 | 16 | Comparative Example |
| 15 | L | 28 | 60 | 11 | 8 | 2.2 | 0.36 | 1084 | 742 | 16 | 14 | Comparative Example |
| 16 | L | 23 | 71 | 6 | 7 | 2.1 | 0.43 | 1135 | 821 | 13 | 16 | Comparative Example |
| 17 | L | 45 | 34 | 12 | 6 | 2.4 | 0.34 | 886 | 456 | 22 | 15 | Comparative Example |
| 18 | L | 24 | 69 | 7 | 1 | 2.2 | 0.42 | 1134 | 801 | 13 | 17 | Comparative Example |
| 19 | M | 74 | 9 | 1 | 2 | 1.6 | 0.28 | 709 | 320 | 14 | 15 | Comparative Example |
| 20 | M | 27 | 65 | 8 | 3 | 1.6 | 0.56 | 1093 | 775 | 9 | 18 | Comparative Example |
| 21 | M | 21 | 3 | 0 | 3 | 1.2 | 0.22 | 667 | 418 | 29 | 17 | Comparative Example |
| 22 | M | 2 | 96 | 2 | 1 | 1.5 | 0.88 | 1304 | 1150 | 6 | 19 | Comparative Example |

(continued)

| No. | Steel sample ID | Steel microstructure of base steel sheet Area ratio (%) Ferrite + Bainite | Martensite | Retained austenite | Number density of MnS particle groups (/mm²) | $M_C/M_Q$ | Diffusible hydrogen content in base steel sheet (mass ppm) | Properties TS (MPa) | YS (MPa) | El (%) | λ (%) | Remarks |
|---|---|---|---|---|---|---|---|---|---|---|---|---|
| 23 | M | 85 | 9 | 0 | 1 | 1.6 | 0.20 | 674 | 414 | 26 | 18 | Comparative Example |
| 24 | M | 35 | 57 | 8 | 2 | 1.6 | 0.64 | 1030 | 625 | 17 | 12 | Comparative Example |
| 25 | M | 53 | 16 | 15 | 1 | 1.1 | 0.51 | 722 | 436 | 29 | 17 | Comparative Example |
| 26 | M | 20 | 80 | 0 | 2 | 1.5 | 0.55 | 1038 | 840 | 9 | 17 | Comparative Example |
| 27 | M | 29 | 62 | 9 | 2 | 1.4 | 0.68 | 1050 | 701 | 14 | 14 | Comparative Example |
| 28 | M | 27 | 66 | 7 | 2 | 1.3 | 0.40 | 1093 | 724 | 15 | 21 | Example |
| 29 | M | 26 | 68 | 6 | 1 | 1.2 | 0.38 | 1105 | 693 | 15 | 21 | Example |
| 30 | N | 35 | 56 | 9 | 0 | 1.3 | 0.29 | 986 | 637 | 17 | 22 | Example |
| 31 | O | 30 | 57 | 13 | 1 | 1.5 | 0.38 | 1010 | 692 | 18 | 26 | Example |
| 32 | P | 32 | 63 | 5 | 1 | 1.4 | 0.37 | 1080 | 696 | 14 | 23 | Example |
| 33 | Q | 24 | 70 | 6 | 1 | 1.4 | 0.14 | 1045 | 842 | 12 | 96 | Example |
| 34 | R | 37 | 48 | 12 | 1 | 1.2 | 0.30 | 1066 | 715 | 18 | 24 | Example |
| 35 | S | 28 | 63 | 9 | 3 | 1.5 | 0.40 | 877 | 531 | 19 | 23 | Example |
| 36 | T | 40 | 54 | 6 | 2 | 1.6 | 0.24 | 985 | 798 | 17 | 33 | Example |
| 37 | U | 25 | 70 | 5 | 3 | 1.4 | 0.39 | 1098 | 731 | 15 | 24 | Example |
| 38 | V | 51 | 38 | 11 | 2 | 1.2 | 0.28 | 858 | 489 | 22 | 23 | Example |
| 39 | W | 28 | 61 | 11 | 1 | 1.5 | 0.36 | 992 | 714 | 18 | 27 | Example |
| 40 | X | 38 | 42 | 16 | 2 | 1.5 | 0.35 | 816 | 528 | 24 | 28 | Example |
| 41 | Y | 39 | 52 | 9 | 1 | 1.2 | 0.36 | 990 | 654 | 18 | 24 | Example |
| 42 | Z | 35 | 58 | 7 | 2 | 1.6 | 0.35 | 1091 | 731 | 15 | 22 | Example |
| 43 | AA | 36 | 56 | 8 | 1 | 1.6 | 0.33 | 1076 | 762 | 17 | 23 | Example |
| 44 | AB | 34 | 52 | 14 | 3 | 1.5 | 0.34 | 795 | 511 | 23 | 26 | Example |
| 45 | AC | 34 | 58 | 8 | 2 | 1.5 | 0.37 | 1004 | 673 | 18 | 26 | Example |

| No. | Steel sample ID | Steel microstructure of base steel sheet | | | | | Diffusible hydrogen content in base steel sheet (mass ppm) | Properties | | | | Remarks |
|---|---|---|---|---|---|---|---|---|---|---|---|---|
| | | Area ratio (%) | | | Number density of MnS particle groups (/mm$^2$) | $M_C/M_Q$ | | TS (MPa) | YS (MPa) | El (%) | $\lambda$ (%) | |
| | | Ferrite + Bainite | Martensite | Retained austenite | | | | | | | | |
| 46 | AD | 46 | 46 | 8 | 3 | 1.6 | 0.27 | 999 | 825 | 19 | 33 | Example |
| 47 | AE | 42 | 55 | 3 | 2 | 1.6 | 0.31 | 728 | 401 | 24 | 20 | Comparative Example |
| 48 | AF | 23 | 68 | 9 | 3 | 1.6 | 0.42 | 1296 | 840 | 8 | 23 | Comparative Example |
| 49 | AG | 31 | 54 | 12 | 1 | 1.1 | 0.40 | 899 | 571 | 10 | 26 | Comparative Example |
| 50 | AH | 54 | 16 | 8 | 2 | 1.1 | 0.31 | 588 | 320 | 32 | 21 | Comparative Example |
| 51 | AI | 29 | 71 | 0 | 1 | 1.6 | 0.39 | 1467 | 842 | 7 | 17 | Comparative Example |
| 52 | AJ | 24 | 70 | 6 | 2 | 1.1 | 0.38 | 1058 | 743 | 14 | 14 | Comparative Example |
| 53 | AK | 72 | 17 | 11 | 2 | 1.5 | 0.28 | 858 | 510 | 13 | 15 | Comparative Example |
| 54 | AL | 27 | 68 | 5 | 2 | 1.1 | 0.38 | 970 | 654 | 16 | 19 | Comparative Example |
| 55 | AM | 26 | 70 | 4 | 3 | 1.4 | 0.42 | 909 | 589 | 18 | 19 | Comparative Example |
| 56 | AN | 48 | 33 | 15 | 3 | 1.5 | 0.33 | 859 | 497 | 25 | 15 | Comparative Example |
| 57 | AO | 68 | 19 | 13 | 3 | 1.2 | 0.30 | 595 | 356 | 34 | 17 | Comparative Example |
| 58 | AP | 32 | 60 | 8 | 1 | 1.1 | 0.40 | 795 | 429 | 22 | 18 | Comparative Example |
| 59 | AQ | 78 | 11 | 11 | 2 | 1.2 | 0.27 | 956 | 573 | 24 | 16 | Comparative Example |

EP 4 613 899 A1

As shown in Table 3, all Examples were determined as pass in all of TS, YS, El, and λ. In addition, members obtained by forming or joining the galvanized steel sheets of Examples all had the desired shape without cracking and were determined as pass in all of TS, YS, El, and λ.

Meanwhile, Comparative Examples were determined as fail in at least one of TS, YS, El, and λ.

INDUSTRIAL APPLICABILITY

It is thus possible to obtain a galvanized steel sheet having high strength, high YS, excellent ductility, and excellent hole expansion formability. Such a galvanized steel sheet can be used advantageously as material for automotive framework structural members having complex shapes, etc. This can make the automotive body more lightweight and thus improve fuel efficiency. The presently disclosed technology therefore has high industrial applicability.

**Claims**

1. A galvanized steel sheet comprising:

   a base steel sheet; and
   a galvanized layer on a surface of the base steel sheet,
   wherein the base steel sheet includes:

   a chemical composition containing, in mass%,
   C: 0.05 % or more and 0.20 % or less,
   Si: 0.1 % or more and 1.8 % or less,
   Mn: 1.5 % or more and 3.0 % or less,
   P: 0.001 % or more and 0.100 % or less,
   S: 0.0500 % or less,
   Al: 0.010 % or more and 1.000 % or less,
   N: 0.0100 % or less, and
   one or both of Nb and Ti: 0.005 % or more and 0.200 % or less in total, and
   satisfying the following formula (1),
   with a balance consisting of Fe and inevitable impurities; and
   a steel microstructure in which an area ratio of one or both of ferrite and bainite is 20 % or more and 90 % or less in total and an area ratio of martensite is 10 % or more and 80 % or less at a position of 1/4 of a sheet thickness of the base steel sheet, a number density of MnS particle groups with a length of 150 $\mu$m or more in a rolling direction is 7/mm$^2$ or less, and $M_C/M_Q$ is 0.85 or more and 2.00 or less, where Mc is an area ratio of martensite at a position of 1/2 of the sheet thickness of the base steel sheet and $M_Q$ is the area ratio of martensite at the position of 1/4 of the sheet thickness of the base steel sheet,
   a diffusible hydrogen content in the base steel sheet is 0.50 mass ppm or less, and
   a tensile strength is 780 MPa or more,

   $$0.50 \leq [C] + [Mn]/5 \leq 0.68 \quad \ldots (1),$$

   where [C] and [Mn] are C content and Mn content in mass% in the chemical composition of the base steel sheet respectively.

2. The galvanized steel sheet according to claim 1, wherein the chemical composition of the base steel sheet further contains, in mass%, at least one selected from

   V: 0.45 % or less,
   B: 0.010 % or less,
   Cr: 1.0 % or less,
   Ni: 1.0 % or less,
   Mo: 1.0 % or less,
   Sb: 0.1 % or less,
   Sn: 0.1 % or less,
   Cu: 1.0 % or less,

Ta: 0.1 % or less,
W: 0.2 % or less,
Mg: 0.01 % or less,
Zn: 0.02 % or less,
Co: 0.02 % or less,
Zr: 0.2 % or less,
Ca: 0.02 % or less,
Se: 0.02 % or less,
Te: 0.02 % or less,
Ge: 0.02 % or less,
As: 0.05 % or less,
Sr: 0.02 % or less,
Cs: 0.02 % or less,
Hf: 0.02 % or less,
Pb: 0.02 % or less,
Bi: 0.02 % or less, and
REM: 0.02 % or less.

3.  The galvanized steel sheet according to claim 1, wherein the galvanized layer is a hot-dip galvanized layer or a galvannealed layer.

4.  The galvanized steel sheet according to claim 2, wherein the galvanized layer is a hot-dip galvanized layer or a galvannealed layer.

5.  A member produced from the galvanized steel sheet according to any one of claims 1 to 4.

6.  A production method for a galvanized steel sheet, the production method comprising:

    heating a steel slab having the chemical composition according to claim 1 or 2 under a condition of an average heating rate in a temperature range from 300 °C to 1220 °C of 0.5 °C/sec or less, a slab heating temperature of 1220 °C or more, and a slab heating time of 1.0 hour or more;
    thereafter hot rolling the steel slab under a condition of a rolling finish temperature of 840 °C or more and 1000 °C or less, an average cooling rate in a temperature range from the rolling finish temperature to 700 °C of 5 °C/sec or more, and a coiling temperature of 620 °C or less, to obtain a hot-rolled steel sheet;
    thereafter cold rolling the hot-rolled steel sheet under a condition of a rolling reduction ratio of 20 % or more and 80 % or less to obtain a cold-rolled steel sheet;
    thereafter heating the cold-rolled steel sheet under a condition of an average heating rate in a temperature range from 600 °C to 750 °C of 1 °C/sec or more;
    thereafter annealing the cold-rolled steel sheet under a condition of an annealing temperature of 750 °C or more and 920 °C or less, an annealing time of 1 second or more and 30 seconds or less, and an atmospheric hydrogen concentration of less than 10 vol%;
    thereafter cooling the cold-rolled steel sheet under a condition of an average cooling rate in a temperature range from the annealing temperature - 30 °C to 600 °C of 5 °C/sec or more and 200 °C/sec or less; and
    thereafter subjecting the cold-rolled steel sheet to galvanizing treatment.

7.  The production method for a galvanized steel sheet according to claim 6, wherein the galvanizing treatment is hot-dip galvanizing treatment or galvannealing treatment.

8.  The production method for a galvanized steel sheet according to claim 6, further comprising performing temper rolling with an elongation rate of 0.10 % or more after the galvanizing treatment.

9.  The production method for a galvanized steel sheet according to claim 7, further comprising performing temper rolling with an elongation rate of 0.10 % or more after the galvanizing treatment.

10. A production method for a member, the production method comprising subjecting the galvanized steel sheet according to any one of claims 1 to 4 to at least one of forming and joining to obtain a member.

*FIG. 1*

10 μm

## INTERNATIONAL SEARCH REPORT

| International application No. |
|---|
| **PCT/JP2023/037921** |

| A. | CLASSIFICATION OF SUBJECT MATTER |
|---|---|

*C22C 38/00*(2006.01)i; *C21D 9/46*(2006.01)i; *C22C 38/14*(2006.01)i; *C22C 38/60*(2006.01)i
FI: C22C38/00 301T; C22C38/14; C22C38/60; C21D9/46 J

According to International Patent Classification (IPC) or to both national classification and IPC

| B. | FIELDS SEARCHED |
|---|---|

Minimum documentation searched (classification system followed by classification symbols)

C22C38/00; C21D9/46; C22C38/14; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 7197062 B1 (JFE STEEL CORPORATION) 27 December 2022 (2022-12-27) entire text, all drawings | 1-10 |
| A | JP 2022-23086 A (JFE STEEL CORPORATION) 07 February 2022 (2022-02-07) entire text | 1-10 |
| A | JP 2019-31727 A (NISSHIN STEEL CO., LTD.) 28 February 2019 (2019-02-28) entire text, all drawings | 1-10 |
| A | JP 7111279 B1 (JFE STEEL CORPORATION) 02 August 2022 (2022-08-02) entire text | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/037921**

| Patent document cited in search report | | | Publication date (day/month/year) | Patent family member(s) | | | Publication date (day/month/year) |
|---|---|---|---|---|---|---|---|
| JP | 7197062 | B1 | 27 December 2022 | WO 2023/007833 entire text, all drawings | A1 | | |
| JP | 2022-23086 | A | 07 February 2022 | US 2023/0129828 entire text | A1 | | |
| | | | | WO 2021/200579 | A1 | | |
| | | | | EP 4130323 | A1 | | |
| | | | | KR 10-2022-0145390 | A | | |
| | | | | CN 115349028 | A | | |
| JP | 2019-31727 | A | 28 February 2019 | (Family: none) | | | |
| JP | 7111279 | B1 | 02 August 2022 | WO 2022/138395 entire text | A1 | | |
| | | | | CN 116635541 | A | | |
| | | | | KR 10-2023-0098625 | A | | |

Form PCT/ISA/210 (patent family annex) (January 2015)

**EP 4 613 899 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002069574 A
- JP 2010156031 A
- JP 2010065316 A